(19) Europäisches Patentamt

European Patent Office

Office européen des brevets

(11) **EP 0 973 301 A2**

(12) **EUROPÄISCHE PATENTANMELDUNG**

(43) Veröffentlichungstag:
**19.01.2000 Patentblatt 2000/03**

(51) Int. Cl.⁷: **H04L 12/437**

(21) Anmeldenummer: **99202276.4**

(22) Anmeldetag: **10.07.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **17.07.1998 DE 19832248**

(71) Anmelder:
• **Philips Corporate Intellectual Property GmbH**
**52064 Aachen (DE)**
Benannte Vertragsstaaten:
**DE**

• **Koninklijke Philips Electronics N.V.**
**5621 BA  Eindhoven (NL)**
Benannte Vertragsstaaten:
**FR GB**

(72) Erfinder:
• **Hermann, Christoph, Dr.-Ing.**
**22335 Hamburg (DE)**
• **Günther, Ralf**
**22335 Hamburg (DE)**

(74) Vertreter:
**Volmer, Georg, Dipl.-Ing.**
**Philips Corporate Intellectual Property GmbH,**
**Habsburgerallee 11**
**52064 Aachen (DE)**

(54) **Lokales Netzwerk mit Master-Netzknoten zur Löschung von kreisenden Nachrichten**

(57)     Die Erfindung bezieht sich auf ein lokales Netzwerk mit mehreren über wenigstens zwei Ringe miteinander gekoppelten Netzknoten, von denen ein Netzknoten einen Master-Netzknoten mit einer Master-Funktion für jeden Ring zur Löschung von den Master-Netzknoten wiederholt erreichenden Nachrichten bildet. Ein Netzknoten sendet nach der Detektierung eines Defekts auf einer zugeordneten Sendeleitung eines Ringes eine Meldung über den Ort des Defekts an alle anderen erreichbaren Netzknoten. Der Netzknoten mit einem Defekt auf seiner Sendeleitung schaltet einer Schleife. Zur Verhinderung, daß Nachrichten zu früh gelöscht werden, schaltet der Master-Netzknoten nach Detektierung eines Defekts auf einer zugeordneten Sendeleitung oder nach Empfang der Meldung über den Ort des Defekts die Master-Funktion ab, die dem Ring mit dem Defekt zugeordnet ist.

FIG. 13

EP 0 973 301 A2

**Beschreibung**

Die Erfindung bezieht sich auf ein lokales Netzwerk mit mehreren überwenigstens zwei Ringe miteinander gekoppelten Netzknoten, von denen ein Netzknoten einen Master-Netzknoten mit einer Master-Funktion für jeden Ring zur Löschung von den Master-Netzknoten wiederholt erreichenden Nachrichten bildet.

Ein solches lokales Netzwerk in Ring-Topologie ist beispielsweise ein Token-Ring, bei dem verschiedene Netzknoten z.B. über einen Ring miteinander gekoppelt sind. Einer dieser Netzknoten hat eine Monitor- oder Überwachungsfunktion, der u.a. mehrfach im Ring kreisende Nachrichten eliminiert. Wenn eine Nachricht den Netzknoten mit der Überwachungsfunktion zum zweiten Mal passiert, wird diese Nachricht gelöscht. Dieses Prinzip ist beispielsweise aus dem Buch „Computer Networks" von Andrew S. Tanenbaum, Prentice-Hall International, Inc., Second Edition, 1988, Seite 159 bekannt. In diesem Buch wird nicht beschrieben, welche Maßnahmen ein Netzknoten mit Überwachungsfunktion ausführen muß, wenn ein Defekt auf einem Ring auftritt.

Der Erfindung liegt die Aufgabe zugrunde, ein lokales Netzwerk zu schaffen, bei dem auch bei einem Defekt in einem Ring die korrekte Funktion eines Netzknotens mit einer Überwachungsfunktion sichergestellt ist.

Die Aufgabe wird durch ein lokales Netzwerk der eingangs genannten Art dadurch gelöst, daß ein Netzknoten nach Detektierung eines Defekts auf einer zugeordneten Sendeleitung eines Ringes zur Sendung einer Meldung über den Ort des Defekts an alle anderen erreichbaren Netzknoten vorgesehen ist,

daß ein Netzknoten mit einem Defekt aufseiner Sendeleitung zur Schaltung einer Schleife vorgesehen ist und
daß der Master-Netzknoten nach Detektierung eines Defekts auf einer zugeordneten Sendeleitung oder nach Empfang der Meldung über den Ort des Defekts zur Abschaltung der Master-Funktion vorgesehen ist, die dem Ring mit dem Defekt zugeordnet ist.

Bei der Erfindung wird der Netzknoten mit der Überwachungsfunktion als Master-Netzknoten bezeichnet der für jeden Ring eine getrennte Überwachungsfunktion aufweist, die Master-Funktion genannt wird. Jede Master-Funktion löscht eine Nachricht, wenn diese eine Master-Funktion wiederholt durchläuft. Bei einem Ausfall eines Nerzknotens oder einem Leitungsbruch muß im Master-Netzknoten eine Master-Funktion abgeschaltet werden, da sonst unter der Voraussetzung, daß in einem Netzknoten eine Schleife von einem Ring zu einem anderen Ring geschaltet worden ist, eine Nachricht gelöscht werden kann, obwohl diese Nachricht noch nicht durch das gesamte Netzwerk gelaufen ist. Ein Netzknoten kann nicht genau bestimmen, ob ein Knotenausfall oder ein Leitungsbruch vorliegt. Es kann beispielsweise über über einen Synchronisationsverlust oder durch Versendung bestimmter Nachrichten festgestellt werden, daß der detektierende Netzknoten keine Nachricht mehr über eine seiner Empfingsleitungen erhält. Falls der Master-Netzknoten nicht selbst einen Defekt detektiert, schaltet er erst nach Empfang einer Meldung über einen Defekt eine Master-Funktion aus. Das ist die Master-Funktion für den Ring, auf dem der Defekt aufgetreten ist. Falls der Master-Netzknoten selbst einen Defekt detektiert, erzeugt er eine Meldung für alle anderen Netzknoten, um diese über den Defekt zu informieren, und schaltet eine Master-Funktion ab. Die Meldung braucht keine Information über die abgeschaltete Master-Funktion zu enthalten, da die Information über den Defekt ausreichend ist.

In Patentanspruch 2 ist angegeben, daß jeder Netzknoten eine Statustabelle enthält. Diese zeigt ein Abbild des lokalen Netzwerkes bezüglich der Leitungsbrüche und der Schaltung von Schleifen. Bevor ein Netzknoten eine Aktion durchführt (z.B. Schleifenaktion und/oder Ein- und Abschalten einer Master-Funktion) wird die Statustabelle von dem jeweiligen Netzknoten ausgewertet.

Bei einem nachfolgenden Leitungsbruch, der nicht auf dem Ring aufgetreten ist, auf dem der erste Defekt vorhanden ist, kann ein Duplex-Leitungsbruch oder ein isolierter Knoten oder eine isolierte Gruppe von Netzknoten vorliegen. Unter einem nachfolgenden Leitungsbruch ist ein zweiter oder dritter oder weiterer Leitungsbruch zu verstehen. Ein Master-Netzknoten detektiert den nachfolgenden Leitungsbruch oder erhält von einem anderen Netzknoten darüber eine Meldung. Es ist erforderlich wenigstens eine weitere Schleife zu schalten. In Patentanspruch 3 sind die Maßnahmen angegeben, die der Master-Netzknoten nach einem nachfolgenden Leitungsbruch auf einer zugeordneten Sende- oder Empfangsleitung durchführt. Unter einer zugeordneten Sende- oder Empfangsleitung eines Netzknotens ist die direkt von dem Netzknoten abgehende Sende- oder Empfangsleitung auf dem inneren oder äußeren Ring zuverstehen.

Bei dem Entstehen von zwei Sub-Ringsystemen durch entsprechende Schleifenaktionen, muß ein Netzknoten desjenigen Sub-Ringsystems, welches nicht den Master-Netzknoten enthält, eine Master-Funktion einschalten, wie dies in Patentanspruch 4 angegeben ist.

Die erforderlichen Maßnahmen zur Erkennung von Nachrichten, die einen Ring mehrfach durchlaufen, sind in Anspruch 5 beschrieben. Besonders ist die Erfindung in einem lokalen Netzwerk einsetzbar, das nach dem asynchronen Transfermodus (ATM) arbeitet. Hierbei werden Nachrichten und Meldungen mittels Zellen übertragen. Anspruch 6 gibt für diesen Fall die Schaltungsmerkmale einer Master-Funktion an und deren Funktion.

Die Erfindung bezieht sich auch, wie in den Ansprüchen 7 und 8 angegeben, auf einen Netzknoten in einem lokalen Netzwerk welches mit weiteren Netzknoten über wenigstens zwei Ringe gekoppelt ist. Ein solcher Netzknoten enthält erfindungsgemäß eine ein- und abschaltbare Master-Funktion, die zur Löschung von Nachrichten vorgesehen ist, die wenigstens einmal vollständig einen Ring durchlaufen haben. Da Netzknoten ist bei eingeschalteten Master-Funktionen nach Detektierung eines Defekts auf einer zugeordneten Sendeleitung eines Ringes oder nach Empfang der Meldung über den Ort des Defekts von einem anderen Netzknoten zur Abschaltung der Master-Funktion eines Rings vorgesehen, die dem Ring mit dem Defekt zugeordnet ist.

Ausführungsbeispiele der Erfindung werden nachstehend anhand der Figuren näher erläutert. Es zeigen:

Fig. 1          ein lokales Netzwerk,
Fig. 2          eine in dem lokalen Netzwerk nach Fig. 1 verwendbare Netzwerkschnittstelle und
Fig. 3 bis 26   Ringsysteme eines lokalen Netzwerkes nach einem oder mehreren Leitungsbrüchen.

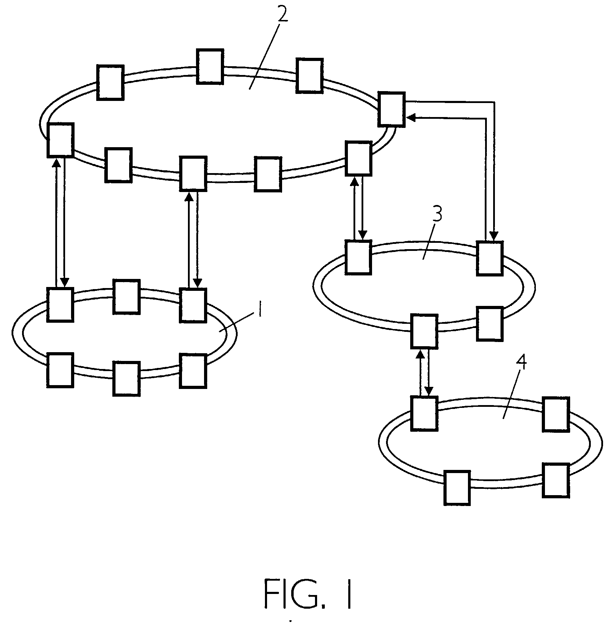

In Fig. 1 ist ein Ausführungsbeispiel eines lokalen Netzwerks mit vier Ringsystemen 1 bis 4 dargestellt, die jeweils zwei Ringe enthalten. Ein Ring stellt einen geschlossenen Signalweg über mehrere Netzknoten dar. Die Ringsysteme 1 bis 4 bilden jeweils zwei gegenläufige Ringe, d.h. die Signale laufen auf den Ringen jeweils in entgegengesetzter Richtung. Ein Netzknoten, der in den Ringsystemen 1 bis 4 jeweils als Rechteck dargestellt ist, umfaßt eine Netzwerkschnittstelle mit vier Ringanschlüssen und zwei Stationsanschlüssen.

An die Stationsanschlüsse ist entweder eine Station oder eine Netzwerkschnittstelle eines anderen Ringsystems angeschlossen. Beispielsweise sind in der Fig. 1 für das Ringsystem 2 insgesamt fünf Netzwerkschnittstellen mit Stationen und vier Netzwerkschnittstellen mit Netzwerkschnittstellen der Ringsysteme 1 und 3 verbunden. Eine Station kann beispielsweise ein Fernsprecher, ein Bildfernsprecher, ein Personal-Computer oder eine Workstation sein. Die Nachrichten bzw. Informationen, die von den Stationen bzw. den Netzwerkschnittstellen stammen, werden nach dem asynchronen Transfermodus mittels Zellen übertragen. Eine Zelle enthält ein Kopffeld mit 5 Bytes und ein Informationsfeld mit 48 Bytes. Die im Kopffeld der Zelle enthaltenen Informationen dienen insbesondere zur Adressierung und zur Durchführung von Vermittlungsfunktionen.

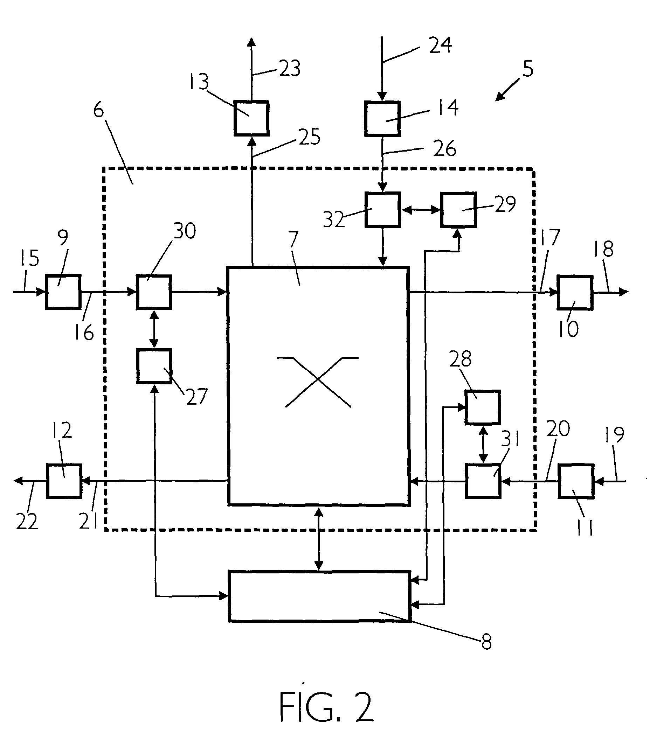

Eine Netzwerkschnittstelle 5 mit vier Ringanschlüssen ist in der Fig. 2 detaillierter dargestellt. Die Netzwerkschnittstelle 5 enthält eine Koppelvorrichtung 6 und eine Steueranordnung 8. Die Koppelvorrichtung 6, die ein Koppelfeld 7 enthält, ist über Anpassungsschaltungen 9 bis 14 mit Ring- und Stationsanschlüssen gekoppelt und hat die Funktion, den Zellenstrom weiter zu vermitteln. Die Anpassungsschaltungen 9 bis 14 können beispielsweise Umsetzeranordnungen enthalten, um die Zellen in übergeordnete Transportrahmen (z.B. in Transportrahmen der synchronen digitalen Hierachie (SDH)) einzufügen oder Pufferspeicher zur Taktanpassung, wenn die Zellen ohne Einfügung in einen übergeordneten Transportrahmen weitergeleitet werden.

Die Anpassungsschaltung 9 ist einerseits mit einem Empfangs-Ringanschluß 15 eines ersten Ringes und andererseits mit einem Anschluß 16, der zur Koppelvorrichtung 6 führt, gekoppelt. Die Anpassungsschaltung 10 ist über einen Anschluß 17 mit der Koppelvorrichtung 6 gekoppelt und liefert einen Zellenstrom an einen Sende-Ringanschluß 18 des ersten Ringes. Einen Zellenstrom von einem Empfangs-Ringanschluß 19 eines zweiten Ringes erhält die Anpassungsschaltung 11, die einen Zellenstrom über einen Anschluß 20 zur Koppelvorrichtung 6 liefert. Von einem Anschluß 21 der Koppelvorrichtung 6 empfängt die Anpassungsschaltung 12 Zellen, die an einen Sende-Ringanschluß 22 des zweiten Ringes weitergeleitet werden.

Ein Stationsanschluß 23 ist über die Anpassungsschaltung 13 und ein Stationsanschluß 24 ist über die Anpassungsschaltung 14 mit der Netzwerkschnittstelle 5 gekoppelt. Die Anpassungsschaltung 13, die einen Zellenstrom von der Koppelvorrichtung 6 erhält, ist über einen Anschluß 25 mit der Koppelvorrichtung 6 gekoppelt. Die Anpassungsschaltung 14, der ein Zellenstrom von einer Netzwerkschnittstelle eines anderen Ringsystems oder einer Station geliefert wird, ist über den Stationsanschluß 24 mit einer Station oder einer Netzwerkschnittstelle eines anderen Ringsystems und über einen Anschluß 26 mit der Koppelvorrichtung 6 gekoppelt. Falls keine Umsetzung der Zellen oder eine Taktanpassung erforderlich ist, sind die Anpassungsschaltungen 9 bis 14 nicht erforderlich.

Die Steueranordnung 8 ist zur Steuerung der Koppelvorrichtung 6 und für weitere Steuerungsfunktionen (z.B. Verbindungsaufbau und -abbau) vorgesehen. Die Steueranordnung 8, die als Mikroprozessor realisiert sein kann, erhält und erzeugt für diese Aufgaben auch Zellen.

Außer dem Koppelfeld 7 enthält die Koppelvorrichtung 6 drei Wegespeicheranordnungen 27, 28 und 29 und drei Empfangsschaltungen 30, 31 und 32. In den Empfangsschaltungen 30, 31 und 32 werden jeweils die Kopffelder von überAnschlüssen 16, 20 und 26 ankommenden Zellen ausgewertet.

Im Kopffeld enthaltene Adresseninformationen werden zur Ansteuerung verschiedener Tabellen für die mir den Empfangsschaltungen 30, 31 und 32 verbundenen Wegespeicheranordnungen 27, 28 und 29 verwendet. Die in den Tabellen abgelegten Daten werden jeweils von den Empfangsschaltungen 30, 31 und 32 verwendet, um die weitere Verarbeitung und Weiterleitung der Zelle zu organisieren. Beispielsweise kann die Empfangsschaltung 30 die Zelle kopieren und mit neuen Adresseninformationen versehen. Die Originalzelle wird z.B. über das Koppelfeld 7 an den Stationsanschluß 23 und die kopierte Zelle über das Koppelfeld 7 an die Anpassungsschaltung 10 gegeben. Es besteht noch die Möglichkeit. daß das Koppelfeld 7 diese Kopierfunktion durchführt.

Die Empfangsschaltung 30 ist über den Anschluß 16 mit der Anpassungsschaltung 9 gekoppelt und leitet empfangene Zellen zum Koppelfeld 7 weiter. Die Wegespeicheranordnung 27 ist mit der Empfangschaltung 30 verbunden. Die Empfangsschaltung 31 ist mit der Wegespeicheranordnung 28 verbunden, erhält Zellen von der Anpassungsschaltung 11 und gibt Zellen an das Koppelfeld 7 weiter. Zwischen dem Koppelfeld 7 und dem Anschluß 26 ist die Empfangsschaltung 32 angeordnet, die mir der Wegespeicheranordnung 29 verbunden ist.

Über die Ringanschlüsse 15 und 18 des ersten Ringes und über die Ringanschlüsse 19 und 22 werden zwei Arten von Nutzzellen übertragen. Einerseits Anwenderzellen, die in ihrem Informationsfeld z. B. Nachrichten oder Daten des Benutzers einer zuvor aufgebauten Verbindung enthalten und andererseits Kontrollzellen, die in ihrem Informationsfeld Steuerungsinformationen enthalten.

Im folgenden werden die Ringanschlüsse 15 und 19 auch als dem Netzknoten zugeordnete Empfingsleitungen und die Ringanschlüsse 18 und 22 als dem Netzknoten zugeordnete Sendeleitungen bezeichnet.

Bestimmte Bits im Kopffeld einer Zeile sind für den VCI (virtual channel identifier) reserviert. Diese Angabe enthält nach Normungsvorschlägen eine indirekte Adressierung für den Bestimmungsort einer Zelle und gibt damit eine virtuelle Verbindung an. Des weiteren sind bestimmte Bits im Kopffeld der Zelle für den VPI (virtual path identifier) reserviert, der ein Bündel mehrerer virtueller Verbindungen angibt.

Bestimmte Bits des VCI und des VPI werden bei diesem Ausführungsbeispiel für andere Informationen als bei den Normungsvorschlägen vorgesehen. Der VPI enthält Informationen über die Adresse (Adresseninformationen) bzw. den Bestimmungsort (Netzknoten) einer Zelle in einem Ringsystem. Der VCI wird für die Angabe über die anwenderbezogene Kennung für eine Verbindung, die Art der Verbindung und die Zellenart verwendet. Außerdem wird der VCI als Adresse für ein Ringsystem benutzt.

Die Steueranordnung 8 der Netzwerkschnittstelle 5 steuert den Verbindungsaufbau einer zugeordneten Station mit anderen Stationen. Die entsprechenden Steuerungsvorgänge für den Aufbau und Abbau von Verbindungen können beispielsweise der europäischen Parentanmeldung EP 0 641 105 A2 entnommen werden.

Die Wegespeicheranordnungen 27 bis 29 der Koppelvorrichtung 6 enthalten Informationen die von den zugeordneten Empfangsschaltungen 30 bis 32 ausgewertet werden, um die weitere Verarbeitung und Weiterleitung der empfangenen Zelle zu organisieren. Beispielsweise kann eine Zelle mit einer anderen Adresse versehen werden, kopiert odergelöscht werden. Die Wegespeicheranordnungen 27 bis 29 können von der Steueranordnung 8 beispielsweise im Fehlerfall (z.B. Kabelbruch bzw. Leitungsbruch) verändert werden.

Bei einer Verbindung zwischen einem Netzknoten eines ersten Ringsystems und einem Netzknoten eines zweiten Ringsystems müssen bei einem Übertritt einer Zelle von einem Ringsystem in ein anderes Veränderungen des VPI und des VCI durchgeführt werden. Hierzu sind vor dem Verbindungsaufbau entsprechende Einträge in den Wegespeicheranordnungen vorgenommen worden.

Wenn ein Fehler im lokalen Netzwerk auftritt, werden von dem einen Fehler detektierenden Netzknoten verschiedene Maßnahmen durchgeführt. Beispielsweise kann ein Ringanschluß oder ein Stationsanschluß unterbrochen werden oder ein Netzknoten ausfallen (Knotenausfall). Von der Steueranordnung 8 einer Netzwerkschnittstelle bzw. eines Netzknotens wird ein solcher Fehler z.B. nach Aussenden von Kontrollzellen eines benachbarten Knotens, die nicht empfangen werden, oder durch einen Synchronisationsverlust detektiert. Im folgenden wird beschrieben, wie wenigstens ein Leitungsbruch oder ein Knotenausfall in einem Ringsystem eines lokalen Netzwerks verarbeitet wird. Ein Netzknoten kann einen Knotenausfall nicht detektieren, sondern stellt fest, daß von der Leitung eines ausgefallenen benachbarten Knoten keine Zellen mehr ankommen. Somit ist ein Knotenausfall, wie im folgenden auch vorausgesetzt wird, als ein zweifacher Leitungsbruch zu interpretieren.

Ein Netzknoten führt verschiedene Aktionen nach der Entstehung eines Leitungsbruchs aus. Die Steueranordnung 8 eines Netzknoten, die einen Leitungsbruch auf der zugehörigen Empfangsleitung des inneren oder äußeren Rings detektiert, veranlaßt die Sendung einer Zelle mir einer Meldung über einen Fehler, die eine Meldung erster Art darstellt, über beide Ringe. Die Zelle mit der Meldung erster Art, die eine Information über den Ort des Fehlers enthält, wird als zu einer Broadcast- oder Verteilverbindung zugehörig betrachtet und wird somit zu allen anderen Netzknoten des Ringsystems gesendet. Eine Meldung erster Art (Meldung über einen Fehler) gibt den Netzknoten an, dessen Sendeleitung einen Leitungsbruch aufweist, und den Ring, auf welchem der Fehler aufgetreten ist.

Es wird noch eine Meldung zweiter Art in einer Zelle von einem Netzknoten über das Netzwerk in Zusammenhang mit einem Fehler gesendet. Das ist eine Meldung über eine vorgenommene oder vorzunehmende Schleifenaktion in einem Netzknoten. Eine solche Meldung zweiter Art kann nur unter der Voraussetzung gesendet werden, wenn die zugehörige Sendeleitung nicht defekt ist. Die Schaltung einer Schleife bedeutet, daß in der Koppelvorrichtung 6 eines Netzknotens umgeroutet wird, d.h. ankommende Zellen werden entweder von dem inneren zum äußeren oder vom äußeren zum inneren Ring weitergeleitet. Hierzu werden die Tabelleneinträge in den zugeordneten Wegespeicheranordnungen 27 bis 29 der Koppelvorrichtung 6 geändert. In der Koppelvorrichtung 6 wird dann aufgrund der Tabelleneinträge in den Wegespeicheranordnungen 27 bis 29 eine Zelle nicht mehr auf den gleichen Ring sondern auf den anderen Ring geleitet.

Die Steueranordnung 8 eines Netzknotens enthält eine Statustabelle, in der Einträge über Leitungsbrüche und Schleifenaktionen jedes Netzknotens des Ringsystems enthalten sind. Eine solche Statustabelle könnte aber auch außerhalb der Steueranordnung 8 angeordnet sein. Die Statustabelle gibt die Netzknoten an, die eine Schleife geschaltet haben und den Ring, von dem infolge der Schleifenaktion Zellen auf den anderen Ring umgeleitet werden. Gegebenenfalls kann ein Statustabelleneintrag zusätzlich bedeuten, daß neben der Schaltung einer Schleife auch die Sendeleitung desjenigen Nerzknotens gebrochen ist, von dem durch die Schleife Zellen auf den anderen Ring umgeleitet worden. Die Statustabelle weist also einen Eintrag für einen Netzknoten auf, dessen Sendeleitung einen Fehler aufweist und der eine Schleife geschaltet hat oder der nur eine Schleifenaktion durchgeführt hat. Ein solcher Eintrag wird im folgenden als Muster oder Pattern bezeichnet. Das Muster wird in der Form, in der es in einer Tabelle eingetragen ist, auch in einer Meldung erster oder zweiter Art übertragen.

Wenn ein Netzknoten eine Meldung erhält wird das empfangene Muster in der zugeordneten Statustabelle eingetragen. Diese Eintragung wird von der zugehörigen Steueranordnung 8 durchgeführt. Aus Vereinfachungsgründen wird im folgenden eine Funktion der Steueranordnung 8 nicht explizit angegeben, sondern als Funktion des betreffenden Nerzknotens erläutert. Nach Empfang der Meldung erfolgt die Auswertung der Starustabelle, durch die eine Schleifenaktion ausgelöst werden kann. Ist eine Schleifenaktion von einem Netzknoten durchgeführt worden, kann eine Meldung zweiter Art über die Schleifenaktion über beide Ringe von dem Netzknoten an alle anderen Netzknoten gesendet werden, wie später erläutert wird.

Wird von einem Nerzknoten ein Fehler detektiert, ändert dieser seine Statustabelle. In die Statustabelle wird eingetragen, welcher Nerzknoten von dem Leitungsbruch betroffen ist und auf welchem Ring der Fehler aufgetreten ist. Anschließend wird der Eintrag als Muster in einer Meldung erster Art über einen Fehler an alle anderen Netzknoten gesendet.

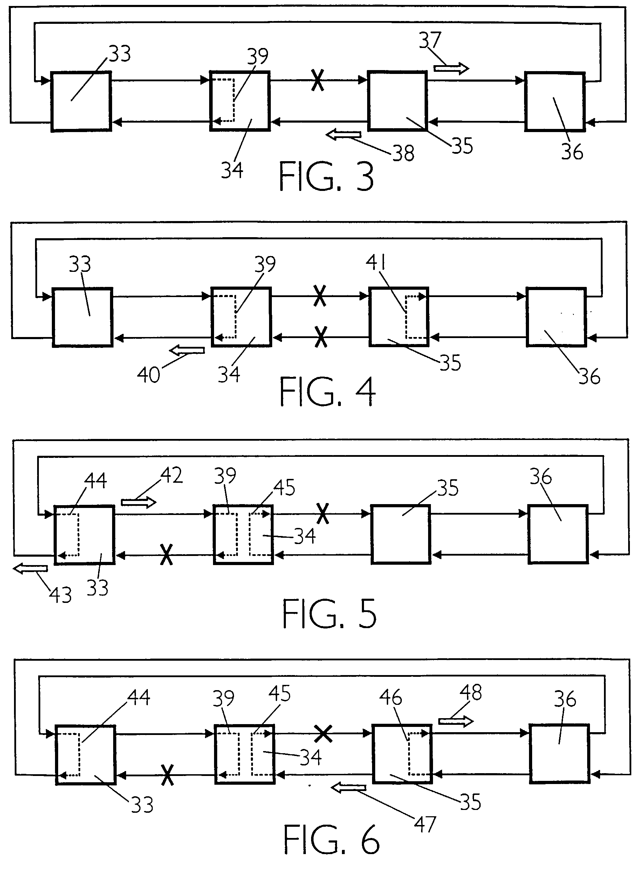

Anhand der Fig. 3 lassen sich die Vorgänge bei einem einzelnen oder Simplex-Leitungsbruch näher erläutern. Das in Fig. 3 dargestellte Ringsystem enthält einen inneren und einen äußeren Ring und vier Nerzknoten 33 bis 36. Die innere Ringverbindung zwischen Nerzknoten 34 und 35 sei defekt. Einen solchen Fehler detektiert der Netzknoten 35, führt daraufhin Änderungen in einer Statustabelle durch und sendet eine Meldung P1 über einen Fehler (Meldung erster Art) über den inneren und äußeren Ring zu den anderen Netzknoten. Die Sendung der Meldung P1 vom Netzknoten 35 auf den inneren Ring in Richtung des Netzknotens 36 ist durch einen Pfeil 37 und die Sendung der Meldung P1 vom Netzknoten 35 auf den äußeren Ring in Richtung des Netzknotens 34 durch einen Pfeil 38 angedeutet. Der Nerzknoten 34, der die Meldung P1 zweimal erhält, reagiert nach Eintreffen der ersten Meldung P1 dadurch, daß er Einträge in seiner Statustabelle vornimmt, diese auswertet und infolge der Auswertung eine Schleife 39 vom inneren zum äußeren Ring schaltet. Infolge der Behandlung der zuerst über den inneren bzw. äußeren Ring eintreffenden Meldung P1 wird die danach über den äußeren bzw. inneren Ring eintreffende Meldung P1 nicht beachtet. Einträge über den Fehler werden nach Eintreffen der Meldung P1 auch in den Statustabellen der anderen Netzknoten 33 und 36 durchgeführt, die ebenfalls ihre jeweiligen Statustabellen auswerten. Die Auswertung in den Netzknoten 33 und 36 bewirkt jedoch keine Aktion. Zellen auf dem inneren Ring werden dann also im Netzknoten 34 auf den äußeren Ring geführt und gelangen dann, anstatt über den inneren Ring über den äußeren Ring zum Zielknoten. Hiermit sind in den jeweiligen Netzknoten 33 bis 36 alle Aktionen nach einem Simplex-Leitungsbruch beendet. Unter einem Simplex-Leitungsbruch soll im folgenden ein Leitungsbruch entweder auf dem inneren oder äußeren Ring zwischen zwei benachbarten Netzknoten verstanden werden.

In Fig. 4 wird ein Duplex-Leitungs- bzw. Kabelbruch gezeigt. Darunter wird verstanden, daß zwischen zwei benachbarten Netzknoten die Leitungen des inneren und äußeren Rings defekt sind. Tritt ein zweiter Fehler nach Auftreten eines Simplex-Kabelbruchs, wie in Fig. 1 beschrieben, dann im äußeren Ring zwischen den Nerzknoten 34 und 35 auf (Fig. 4), wird dieser Defekt von dem Netzknoten 34 detektiert, der daraufhin weitere Änderungen in seiner Statustabelle durchführt und eine Meldung P2 über einen Fehler (Meldung erster Art) über den äußeren Ring (Pfeil 40) zu den anderen Netzknoten 33, 35 und 36 sendet. Nach Empfang der Meldung P2 ändern die Netzknoten 33, 35 und 36 ihre Statustabellen und werten diese aus. Aufgrund der Auswertung schaltet der Netzknoten 35 zusätzlich eine Schleife 41 vom äußeren auf den inneren Ring. Falls ein Defekt gleichzeitig auf dem inneren und äußeren Ring zwischen den Netzknoten 34 und 35 auftritt, senden die einen Fehler detektierenden Netzknoten gleichzeitig die Meldungen über beide Ringe aus, die dann auf analoge Weise hintereinander in jedem Netzknoten behandelt werden.

Im folgenden sei vorausgesetzt, daß ein Defekt des inneren Rings zwischen den Knoten 34 und 35, wie in Fig. 3 gezeigt, aufgetreten ist. Ein weiterer Leitungsbruch sei im äußeren Ring zwischen den Netzknoten 33 und 34 aufgetreten (Fig. 5). Diesen zweiten Defekt detektiert der Netzknoten 33. Dieser Netzknoten 33 führt entsprechende Veränderungen seiner Statustabelle durch und sendet über den inneren und äußeren Ring Meldungen P3 (Meldung erster Art) über einen Fehler (Pfeile 42 und 43) an die anderen Netzknoten. Nach der Erneuerung der Statustabelleneinträge wertet der Netzknoten 33 die Statustabelle aus und stellt fest, daß schon ein Defekt auf dem inneren Ring zwischen den Netzknoten 34 und 35 vorhanden ist und daher der Netzknoten 34 aufgrund des zweiten Defekts isoliert ist. Eine Isolierung eines Knotens bedeutet, daß dieser keine Zellen senden kann. Zellen, die bestimmten Verbindungen zwischen z.B. zwei Teilnehmern zugeordnet sind und die nicht zurzugeordneten Station des isolieren Knotens gehören, können den isolierten Knoten nicht passieren bzw. durchlaufen. Ein isolierter Knoten erscheint aus der Sicht seiner benachbarten Netzknoten wie ein Knoten, der ausgefallen ist. Wie oben schon erwähnt, sendet ein ausgefallener Knoten über seine Sendeleitungen keine Zellen mehr, was durch Feststellung eines Synchronisationsverlustes oder mit Hilfe von Kontrollzellen festgestellt werden kann. Ein dem isolierten Knoten benachbarter Knoten stellt aber immer einen Leirungsbruch fest. Daher schaltet der Netzknoten 33 eine Schleife 44 vom inneren zum äußeren Ring, führt entsprechende Statustabelleneinträge durch und sendet über beide Ringe Meldungen P4 (Meldungen zweiter Art) über eine Schleifenaktion aus (wiederum durch die Pfeile 42 und 43 angedeutet).

Nachdem der Netzknoten 34 die Meldung P3 vom Netzknoten 33 empfingen hat, werden entsprechende Statustabelleneinträge durchgeführt. Der Netzknoten 34 ermittelt dann nach Überprüfen der Tabellen, daß er isoliert ist und setzt eine Schleife 45 vom äußeren zum inneren Ring (Fig. 5). Diese Schleife ist dann erforderlich, wenn später der Defekt behoben wird und das Ringsystem schrittweise in den normalen Zustand übergeht. Nach Empfang der Meldung P4 wird deren Inhalt dann noch in der Statustabelle des Netzknotens 34 abgelegt. Hierbei ist zu beachten, daß der Knoten 33 noch den Knoten 34 erreichen kann.

Der Netzknoten 35 ändert ebenfalls seine Statustabelleneinträge nach Empfing der Meldung P3 und stellt fest, daß der Knoten 34 isoliert ist. Er setzt eine Schleife 46 vom äußeren zum inneren Ring, trägt dies in seine Statustabelle ein und sendet eine Meldung P5 (Meldung zweiter Art) über eine Schleifenaktion (Pfeile 47 und 48) an alle anderen Netzknoten. Die Netzknoten 33, 34 und 36 empfangen diese Meldung P5, tragen sie in ihre jeweilige Statustabelle ein und werten sie aus. Die Auswertung ergibt, daß keine weitere Aktion durchgeführt werden muß.

In dem oben beschriebenen Ausführungsbeispiel detektiert der Netzknoten 33 den zweiten Leitungsbruch aufdem äußeren Ring zwischen den Netzknoten 33 und 34, nachdem dieser die Meldung P1 vom Netzknoten 35 über den ersten Leitungsbruch zwischen den Netzknoten 34 und 35 empfangen hat. Wenn aber der Netzknoten 33 zuerst den zweiten Leitungsbruch vor Empfang der Meldung P1 detektiert, wird ein Statustabelleneintrag wie oben beschrieben durchgeführt und auch eine Meldung P3 ausgegeben. Nach Empfang der Meldung P1 wird deren Inhalt der entsprechenden Statustabelle im Netzknoten 33 hinzugefügt.

Auch wenn die Netzknoten 33 und 35 jeweils gleichzeitigeine Meldung erhalten, stellt dies kein Problem dar. Beide Netzknoten stellen nach Auswertung der empfangenen Meldungen fest, daß der Netzknoten 34 isoliert ist und senden dann die Meldung P3, P4 bzw. P5 aus.

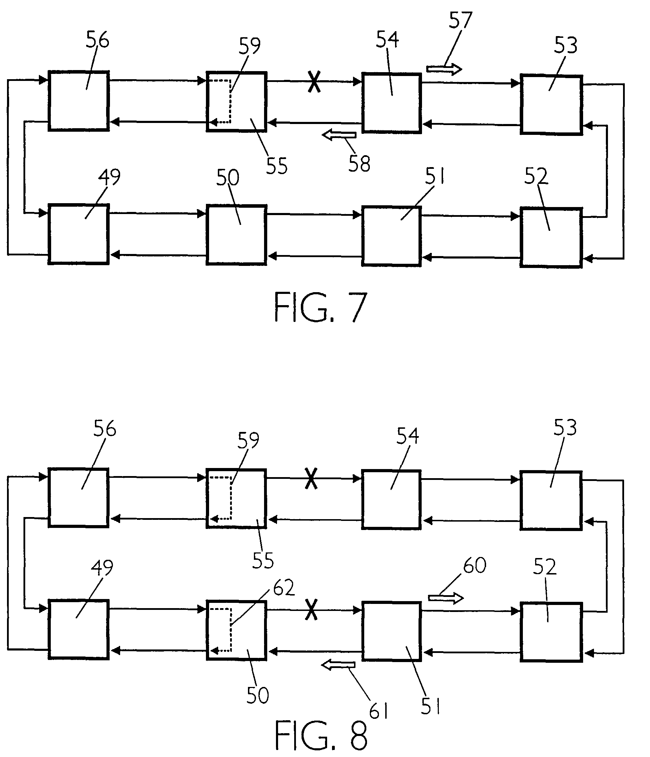

Wenn ein Leitungsbruch aufeinem inneren und einem äußeren Ringvorhandenist und mehrere Netzknoten zwischen den defekten Leitungen enthalten sind, entstehen nach einer Detektion und Rekonfigurierung des Ringsystems zwei Sub-Ringsysteme mir einer isolierten Gruppe von Nerzknoten, wie im folgenden anhand der Fig. 7 bis 10 gezeigt wird. Eine isolierte Gruppe von Netzknoten kann keine Zellen mehr zu einem anderen Sub-Ringsystem senden. Die Fig. 7 bis 10 zeigen ein Ringsystem mit acht Netzknoten 49 bis 56. Es sei, wie in Fig. 7 gezeigt, vorausgesetzt, daß ein Leitungsbruch auf dem äußeren Ring zwischen den Netzknoten 54 und 55 entstanden ist. Der Netzknoten 54, der vom Netzknoten 55 übei den äußeren Ring Zellen empfangen sollte, detektiert den Defekt, führt entsprechende Einträge in seiner Statustabelle durch und informiert die anderen Netzknoten 49 bis 53, 55 und 56 mittels einer Meldung P6 (Meldung erster Art) über einen Fehler (Pfeile 57 und 58), die über den äußeren und inneren Ring gegeben wird. Der Netzknoten 55 ändert nach Empfing der Meldung P6 seine Statustabelleneinträge, wertet die Statustabelle aus und legt eine Schleife 59 von dem äußeren zum inneren Ring. Die anderen Netzknoten 49 bis 53 und 56 aktualisieren nach Empfing der Meldung P6 ebenfalls ihre Statustabellen. Eine nachfolgende Auswertung derjeweiligen Statustabellen in den Netzknoten 49 bis 53 und 56 ergibt allerdings, daß keine weitere Aktion erfolgen muß.

Ferner sei vorausgesetzt, daß ein Leitungsbruch am inneren Ring zwischen den Netzknoten 50 und 51 auftritt, wie dies Fig. 8 zeigt. Der Netzknoten 51 detektiert den Fehler, ändert die Statustabelleneinträge und informiert mit Hilfe einer Meldung P7 (Meldung erster Art) über einen Fehler (Pfeile 60 und 61), die über beide Ringe gesendet wird, die anderen Netzknoten 49, 50 und 52 bis 56. Der Nerzknoten 50 aktualisiert nach Empfang der Meldung P7 ebenso wie alle anderen Netzknoten 49 und 52 bis 56 seine Statustabelle, wertet diese aus und schaltet infolge der Auswertung eine Schleife 62 vom inneren zum äußeren Ring.

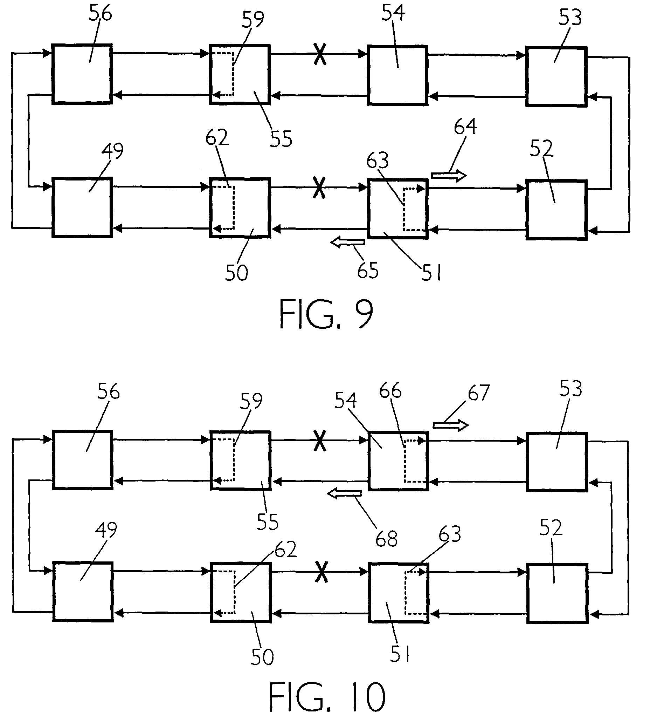

Anhand seiner Statustabelleneinträge ermittelt der Knoten 51, daß die Knoten 51 bis 54 keine Zellen mehr von den Knoten 49, 50, 55 und 56 aufgrund des zweiten Leitungsbruches empfingen können, eine isolierte Gruppe von Knoten darstellen und somit Sub-Ringsysteme gebildet werden müssen. Daraufhin schaltet der Netzknoten 51, wie das Fig. 9 zeigt, eine Schleife 63 vom äußeren zum inneren Ring und informiert mittels einer Meldung P8 (Meldung zweiter Art) über eine Schleifenaktion (Pfeile 64 und 65) alle anderen Netzknoten 49 bis 51 und 53 bis 56.

Der Netzknoten 54 erhält zuerst die Meldung P7 und anschließend die Meldung P8. Nach Empfing der Meldung P7 stellt der Netzknoten 54 fest, daß ein Sub-Ringsystem gebildet werden muß. Der Netzknoten 54 schaltet ebenfalls eine Schleife 66 vom inneren zum äußeren Ring und sendet Meldungen P9 (Meldungen zweiter Art) über eine Schleifenaktion (Pfeile 67 und 68) zu allen anderen Netzknoten 49 bis 53, 55 und 56. In allen Netzknoten 49 bis 56 wird dann die jeweilige Statustabelle angepaßt und ausgewertet. Es erfolgt keine weitere Aktion in den Netzknoten 49 bis 56.

In allen Netzknoten 49 bis 56 weisen danach die jeweiligen Statustabellen die gleichen Einträge auf. Der gleiche Status in allen Statustabellen ist auf jeden Fall bei einem oder zwei Leitungsbrüchen, die auf verschiedenen Ringen aufgetreten sind und wie oben beschrieben ist, vorhanden. Falls mehrere Leitungsbrüche ausschließlich auf einem Ring entstanden sind, ist der Status in den jeweiligen Statustabellen der Netzknoten gleich. Bei mehr als zwei Leitungsbrüchen auf verschiedenen Ringen kann der gleiche Status in allen Statustabellen möglicherweise nicht erreicht werden.

Bei der Initalisierung eines lokalen Netzwerkes (nach der Inbetriebnahme oder einem Neustart) sendet beispielsweise jeder Netzknoten seine individuell vorgegebene Adresse in einer Nachricht in einem Zellenstrom über den inneren oder äußeren Ring. Jeder Nerzknoten des Rings fügt in einer vorgegebenen Reihenfolge in die Nachricht seine jeweilige Adresse ein. Nach Empfang der Nachricht des Netzknotens, der die Nachricht ursprünglich ausgesendet hat, wertet dieser den Inhalt der Nachricht aus und kennt damit die Reihenfolge der Adressen aller Netzknoten des Ringsystems auf dem inneren bzw. äußeren Ring. Jeder Netzknoten ermittelt den Netzknoten mir der kleinsten Adresse und weist diesem Netzknoten die zyklische Knotennummer 0 (CNN 0; CNN = cyclic node number) zu. Anschließend werden in Zellstromrichtung den anderen Netzknoten beispielsweise entlang des inneren Rings aufsteigend die zyklischen Knotennummern 1, 2, 3, ... , R-1 zugewiesen, wobei $R^0$ die Anzahl der Netzknoten im Ringsystem ist. Beispielsweise weisen die dem Netzknoten mit der CNN 3 benachbarten Netzknoten die CNN 2 und die CNN 4 oder, wenn das Ringsystem nur aus vier Netzknoten besteht, die CNN 0 auf.

Die Statustabelle innerhalb eines Netzknotens, die beispielsweise Bestandteil der Steueranordnung 8 ist, hat fit jeden Nerzknoten des Ringsystems Einträge. Die Tabelle ist dabei nach den zyklischen Knotennummern geordnet. Beispielsweise weist die Tabelle außer einer Spalte mit den CNN, eine Spalte auf, in der angezeigt ist, ob die Sendeleitung des inneren Rings, die mit dem jeweiligen Netzknoten verbunden ist, gebrochen ist. Eine weitere Spalte existiert noch für die Anzeige eines Leitungsbruches auf dem äußeren Ring.

So bedeutet der Eintrag 3, 0, 1, daß ein Bruch in der Sendeleitung des äußeren Rings des Netzknotens mit der CNN 3 vorliegt und daß eine Schleife im Netzknoten mit der CNN 3 geschaltet ist, so daß der innere Ring nicht mehr erreichbar ist. Der Eintrag 3, 0, 1 kann - wie vorher schon erwähnt - auch bedeuten, daß nur eine Schleife geschaltet ist, ohne daß eine Leitung gebrochen ist. Das kann der Fall sein, wenn ein isolierter Netzknoten oder eine isolierte Gruppe von Netzknoten entstanden ist und entsprechend behandelt wird.

Wie anhand der Fig. 3 bis 10 beschrieben ist, wird bei einem detektierten Leitungsbruch oder einer durchgeführten Schleifenaktion eine Meldung im Regelfall über den inneren und äußeren Ring gesendet. Hierfür wird eine Anwenderzelle verwendet, die in ihrem Informationsfeld die oben beschriebenen Angaben enthält. Eine Meldung beispielsweise erster Art in einer Anwenderzelle enthält ein Muster mit einer CNN und dem Fehlerort (innerer oder äußerer Ring). Wenn der Fehler auf dem inneren Ring aufgetreten ist, fügt der detektierende Netzknoten i (z.B. Netzknoten 35 in Fig. 3), i = 0, ... , R-1, unter der Voraussetzung, daß die zyklische Knotennummer CNN in Zellstromrichtung des inneren Rings vergeben ist, die Information [$mod_R(i-1)$, 1, 0] in eine Anwenderzelle ein, wobei $mod_R(k)$ den Rest nach einer Division von k durch R angibt. Wenn der detektierende Netzknoten i einen Fehler auf dem äußeren Ring feststellt, wird die Information [$mod_R(i+1)$, 0, 1] unter der Voraussetzung, daß die zyklische Knotennummer CNN in Zellstromrichtung des inneren Rings vergeben ist, in eine Anwenderzelle eingefügt. Die Anwenderzellen werden an alle anderen Netzknoten des Ringsystems weitergeleitet. Die Netzknoten, welche die Zelle mit der Information empfangen, tragen die empfangene Information in ihre jeweilige Statustabelle ein. Ein Netzknoten erkennt dann an den Einträgen in der Statustabelle, welche Aktion in einem anderen Netzknoten durchgeführt worden ist. So bedeutet beispielsweise der Eintrag [$mod_R(i)$, 1, 0], daß der Netzknoten i eine Schleife vom inneren zum äußeren Ring geschaltet hat oder unmittelbar schalten wird. Im Falle eines Simplex- oder Duplex-Leitungsbruchs ist die Schaltung der Schleife infolge eines Leitungsbruchs erfolgt. Im Falle einer isolierten Gruppe von Netzknoten oder eines isolierten Knotens kann ein solcher Eintrag auch das Schalten einer Schleife ohne entsprechenden Leitungsbruch bedeuten. Das bedeutet, daß ein bestimmter Statustabelleneintrag die Schaltung einer Schleife wegen eines Leitungsbruches oder wegen einer Isolierung eines benachbarten Netzknotens oder auch wegen einer Isolierung einer benachbarten Gruppe von Netzknoten angibt. Falls bei einem isolierten Netzknoten zusätzlich auch ein Leitungsbruch in den Empfingsleitungen auftritt, detektiert dies der isolierte Netzknoten. Eine Änderung der Statustabelle erfolgt nicht, weil die schon vorhandenen Statustabelleneinträge das Schalten einer Schleife und auch einen möglichen Leitungsbruch auf den jeweiligen Empfangsleitungen angeben.

Nach einer Änderung in der Statustabelle werden Statusveränderungen und gegebenenfalls Änderungen in den Wegespeicheranordnungen 27 bis 29, z.B. zum Schalten einer Schleife, durchgeführt. Ist ein einziger Leitungsbruch aufgetreten, wird in jedem Netzknoten mit einer CNN K, $K^0$ {0, 1, 2, ... , R-1}, wobei R die Anzahl der Netzknoten eines Ringsystems angibt, die Statustabelle geprüft. In dem Netzknoten mit der CNN i, dessen Sendeleitung des inneren oder äußeren Rings einen Bruch aufweist, wird eine Schleife geschaltet, indem die Tabellen der entsprechenden Wegespeicheranordnungen 27 bis 29 in dem Netzknoten mit der CNN i geändert werden. In den anderen Netzknoten wird keine weitere Aktion durchgeführt.

Im folgenden wird die schon zuvor kurz skizzierte Methode zur Behandlung von einem Leitungsbruch oder mehreren Leitungsbrüchen näher vorgestellt. Diese ermöglicht, bei zwei oder mehr Leitungsbrüchen alle erforderlichen Aktionen zu starten. Hierzu werden zuerst zwei Mengen U und D definiert. Die Menge U gibt die CNN aller Knoten an, bei welchen auf ihrer jeweiligen Sendeleitung des inneren Rings ein Leitungsbruch aufgetreten ist, und die Menge D gibt die CNN aller Knoten an, bei welchen auf ihrer jeweiligen Sendeleitung des äußeren Rings ein Leitungsbruch aufgetreten ist. In dem Fall, daß ein Leitungsbruch auf der Sendeleitung des inneren Rings des Netzknotens mit der CNN 2 aufgetreten ist, beträgt U = {2} und

$$D = \emptyset$$

(leere Menge).

Es sei vorausgesetzt, daß zwei Leitungsbrüche aufgetreten sind. Wenn

$$U = \emptyset$$

ist, ist jeweils ein Defekt aufSendeleitungen des äußeren Rings zweier Netzknoten mit den CNN i und j (i ≠ j), i, $j^0$ {0, ... , R-1} aufgetreten. Der Netzknoten i, bei dem zuerst ein Leitungsbruch aufgetreten ist und der schon eine Schleife geschaltet hat, hat zuvor eine Marke „LoopbackOIdone" gesetzt und führt daher keine weitere Aktion aus, wenn er nach Eintragung des Musters über den zweiten Leitungsbruch seine Statustabelle auswertet. Der Netzknoten j findet keine gesetzte Marke, bildet eine Schleife vom äußeren zum inneren Ring und setzt eine Marke „LoopbackOIdone".

Wenn ein zweiter Leitungsbruch aufgetreten ist und

$$D = \emptyset$$

ist, ist jeweils ein Defekt auf Sendeleitungen des inneren Rings zweier Netzknoten mit den CNN i und j (i ≠ j) aufgetreten. Der Netzknoten i, bei dem zuerst ein Leitungsbruch aufgetreten ist und der schon eine Schleife geschaltet hat zuvor eine Marke „LoopbackIOdone" gesetzt und führt nach Auswertung der Statustabelle, die zusätzlich den Eintrag über das Muster des zweiten Leitungsbruchs enthält, keine weitere Aktion aus. Der Netzknoten j findet keine gesetzte Marke, bildet eine Schleife vom inneren zum äußeren Ring und setzt eine Marke „LoopbackIOdone".

Ist jeweils ein Leitungsbruch aufdem inneren und äußeren Ring entstanden, sind die beiden Mengen U und D nicht leer, d.h. U = {u} und D = {d} . Jeder Netzknoten mit einer CNN K, $K^0$ {0, 1, 2, ..., R-1}, wertet nach dem zweiten Leitungsbruch die Statustabelle aus. Dabei können die drei folgenden Fälle A, B und C auftreten:

A) Im ersten Fall sei u = d , d.h. ein Netzknoten mit einer CNN u = d ist isoliert, wie das in den Fig. 5 bis 6 dargestellt ist. Die beiden (innerer und äußerer Ring) Sendeleitungen dieses Knotens weisen einen Leitungsbruch auf. Jeder Netzknoten K wertet nach dem zweiten Leitungsbruch seine Statustabellen aus:

A1) Wenn K = u = d ist, ist der Netzknoten mit der CNN K der isolierte Netzknoten, in dem eine Marke „CurrentNodeIsolated" gesetzt wird.

A2) Wenn K = $\mathrm{mod}_R$(u+1) ist, ist der Netzknoten mit der CNN K der benachbarte Netzknoten in Zellstromrichtung auf dem inneren Ring, in dem eine Marke „NeighbourIsolatedNodeOI" gesetzt wird. Dieser Netzknoten mit der CNN K schaltet eine Schleife nach der unten beschriebenen Auswertung von gesetzten Marken vom äußeren aufden inneren Ring (vgl. Fig. 6).

A3) Wenn K = $\mathrm{mod}_R$(d-1) ist, ist der Netzknoten mit der CNN K der benachbarte Netzknoten in Zellstromrichtung auf dem äußeren Ring, in dem eine Marke „NeighbourIsolatedNodeIO" gesetzt wird. Dieser Netzknoten mit der CNN K schaltet eine Schleife nach der unten beschriebenen Auswertung von gesetzten Marken vom inneren auf den äußeren Ring (vgl. Fig. 5).

Alle Netzknoten (in Fig. 6 die Netzknoten 33, 35 und 36) außer dem isolierten Netzknoten (in Fig. 6 der Netzknoten 34) bilden ein Sub-Ringsystem mit zwei Randknoten. Die Randknoten sind jeweils die beiden Nerzknoten des entstandenen Sub-Ringsystems, die Schleifen geschaltet haben. Hier sind das die Netzknoten, die dem isolierten Netzknoten benachbart sind. Der Randknoten, der eine Schleife vom äußeren zum inneren Ring geschaltet hat, wird als äußerer Randknoten (in Fig. 6 der Nerzknoten 35) und der Randknoten, der eine Schleife vom inneren zum äußeren Ring geschaltet hat, wird als innerer Randknoten (in Fig. 6 der Netzknoten 33) bezeichnet.

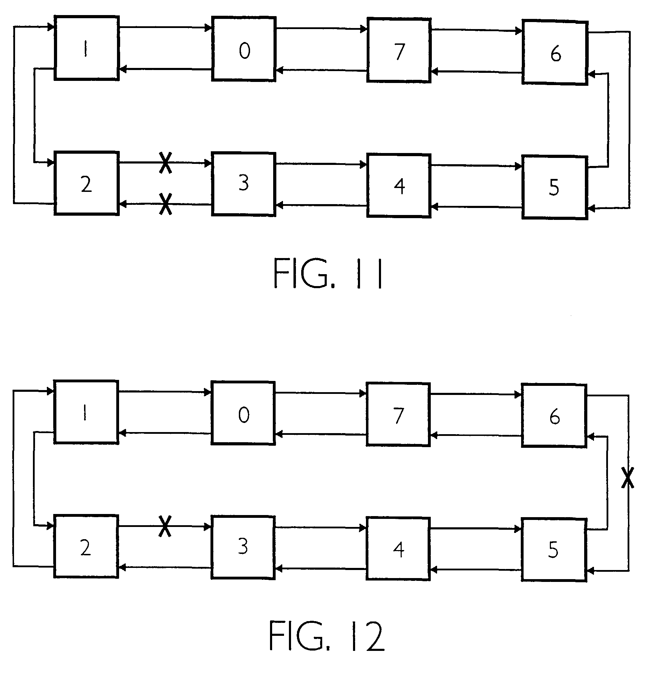

B) Im zweiten Fall sei $\mod_R(u+1) = d$ , d.h. es liegt ein Duplex-Leitungsbruch vor. Ein Beispiel für einen solchen Duplex-Leitungsbruch ist in Fig. 11 dargestellt, in der acht Netzknoten mit den CNN 0 bis 7 dargestellt sind. Ein Leitungsbruch ist auf dem inneren und äußeren Ring zwischen den Netzknoten mit den CNN 2 und 3 entstanden. Es ist also u = 2 und d = 3. Die Sendeleitung des inneren Rings und die Empfangsleitung des äußeren Rings des Netzknotens mit der CNN u bzw. die Sendeleitung des äußeren Rings und die Empfangsleitung des inneren Rings des Netzknotens mit der CNN d weisen einen Leitungsbruch auf. Jeder Netzknoten K wertet nach dem zweiten Leitungsbruch seine Statustabellen aus.

B1) Wenn K = d ist, setzt der Netzknoten mir der CNN K eine Marke „DuplexLineBreakOI". Dieser Netzknoten schaltet eine Schleife nach der unten beschriebenen Auswertung von gesetzten Marken vom äußeren auf den inneren Ring, wenn diese nicht schon aufgrund einer vorhergehenden Meldung erster Art geschaltet wurde.

B2) Wenn K = u ist, setzt der Netzknoten mit der CNN K eine Marke „DuplexLineBreakIO". Dieser Netzknoten schaltet eine Schleife nach der unten beschriebenen Auswertung von gesetzten Marken vom inneren auf den äußeren Ring, wenn diese nicht schon aufgrund einer vorhergehenden Meldung erster Art geschaltet wurde.

Auch bei einem Duplex-Leitungsbruch wird ein Sub-Ringsystem mir zwei Randknoten gebildet. Die Randknoten sind wiederum die beiden Netzknoten des Sub-Ringsystems, die eine Schleife geschaltet haben. Hier sind das jeweils die Netzknoten, deren direkte Verbindungen aufgrund des Duplex-Leitungsbruchs unterbrochen sind. Bei dem in Fig. 4 dargestellten Beispiel eines Duplex-Leitungsbruchs ist der äußere Randknoten (Schleife vom äußeren zum inneren Ring) der Nerzknoten 35 und der innere Randknoten (Schleife vom inneren zum äußeren Ring) der Netzknoten 34.

C) Im dritten Fall liegt eine isolierte Gruppe von Netzknoten vor, wodurch zwei Sub-Ringsysteme entstehen, wie das die Fig. 7 bis 10 zeigen. In Fig. 12 ist ein weiteres Beispiel mit acht Netzknoten mit den CNN 0 bis 7 dargestellt. Es liegt ein Leitungsbruch auf dem äußeren Ringzwischen den Netzknoten mir den CNN 5 und 6 und auf dem inneren Ring zwischen den Netzknoten mir den CNN 2 und 3 vor. Eine isolierte Gruppe von Netzknoten enthält zwei Endknoten. Ein äußerer Endknoten ist der Netzknoten, welcher einen Leitungsbruch in der Sendeleitung des äußeren Rings enthält. Ein innerer Endknoten ist der Netzknoten, welcher einen Leitungsbruch in der Sendeleitung des inneren Rings aufweist. Ist durch entsprechende Schleifenaktionen aus der isolierten Gruppe ein Sub-Ringsystem entstanden, dann heißen die Endknoten auch (äußerer bzw. innerer) Randknoten. Beispielsweise wird in der Fig. 10 die isolierte Gruppe durch die Netzknoten 49, 50, 55 und 56 gebildet. Aufgrund der Bildung von Schleifen 63 und 66 in den Netzknoten 51 und 54 der anderen Gruppe entsteht ein zweites Sub-Ringsystem, welches die Netzknoten 51 bis 54 enthält. Der äußere Randknoten des zweiten Sub-Ringsystems ist der Netzknoten 51 und der innere Randknoten des zweiten Sub-Ringsystems der Netzknoten 54.

C1) Wenn der Netzknoten mit der CNN K die Bedingung

$$\mod_R(K-d) + \mod_R(u-K) < R-1$$

erfüllt, gehört der Netzknoten zu einer isolierten Gruppe von Netzknoten.

C1a) Wenn K = d ist, ist der Netzknoten mit der CNN K der äußere Endknoten. Dieser setzt eine Marke „EdgeNodeClosedLoopOI" und schaltet eine Schleife nach der unten beschriebenen Auswertung von gesetzten Marken vom äußeren auf den inneren Ring, sofern diese nicht schon besteht.

C1b) Wenn K = u ist, ist der Netzknoten mir der CNN K der innere Endknoten. Dieser setzt eine Marke „EdgeNodeClosedLoopIO" und schaltet eine Schleife nach der unten beschriebenen Auswertung von gesetzten Marken vom inneren aufden äußeren Ring, sofern diese nicht schon besteht.

C2) Wenn der Netzknoten mit der CNN K nicht die Bedingung

$$\mod_R(K-d) + \mod_R(u-K) < R-1$$

erfüllt, gehört der Netzknoten nicht zu einer isolierten Gruppe von Netzknoten aber zu einem Sub-Ringsystem.

C2a) Wenn K = $\mod_R(d-1)$ ist, ist der Nerzknoten mir der CNN K der benachbarte Nerzknoten des äußeren Endknotens der isolierten Gruppe und ein innerer Randknoten. Dieser setzt eine Marke „NeighbourClosedLoopIO" und schaltet eine Schleife nach der unten beschriebenen Auswertung von gesetzten Marken vom inneren auf den äußeren Ring, sofern diese nicht schon besteht.

C2b) Wenn K = $\mod_R(u+1)$ ist, ist der Netzknoten mit der CNN K der benachbarte Netzknoten des inneren Endknotens der isolierten Gruppe und ein äußerer Randknoten. Dieser setzt eine Marke

„NeighbourClosedLoopOI" und schaltet eine Schleife nach der unten beschriebenen Auswertung von gesetzten Marken vom äußeren auf den inneren Ring, sofern diese nicht schon besteht.

Nachdem eine Statustabelle in den Nerzknoten ausgewertet und verschiedene Marken gesetzt worden sind, werden die jeweiligen Marken interpretiert. Wenn die Marke „DuplexLineBreakIO" oder „DuplerLineBreakOI" gesetzt und noch keine Schleife geschaltetworden ist, wird als nächstes die Schleifenaktion vorgenommen. Anschließend wird die Marke „LoopbackIOdone" oder „LoopbackOIdone" gesetzt.

Wenn die Marke „EdgeNodeClosedLoopOI" oder „EdgeNodeClosedLoopIO" gesetzt und eine entsprechende Schleifenaktion bisher nicht durchgeführt worden ist, wird die entsprechende Schleife geschaltet und die Marke „LoopbackIOdone" oder „LoopbackOIdone" gesetzt. Über diese Aktion sind die oder werden die übrigen Knoten schon durch die Meldung erster Art informiert.

Wenn die Marke „NeighbourIsolatedNodeOI", „NeighbourIsolatedNodeIO", „NeighbourClosedLoopOI" oder „NeighbourClosedLoopIO" gesetzt und eine entsprechende Schleifenaktion bisher nicht durchgeführt worden ist, sendet der betreffende Netzknoten eine Meldung zweiter Art, welche die jeweilige Schleifenaktion beschreibt, an alle anderen erreichbaren Netzknoten. Es wird dann die Schleife geschaltet und die Marke „LoopbackIOdone" oder „LoopbackOIdone" gesetzt.

Wenn die Marke „CurrentNodeIsolated" gesetzt ist und der betreffende Netzknoten noch keine Schleifenaktion durchgeführt hat, wird dies unter der Voraussetzung, daß der Netzknoten nicht außer Funktion ist (Knotenausfall), nachgeholt.

Der oben angegebene Auswerteprozeß kann auch auf mehr als zwei Leitungsbrüche angewendet werden. Wenn

$$U = \iota$$

ist, sind alle Leitungsbrüche aufdem äußeren Ring aufgetreten. Es wird dann, falls bisher noch nicht durchgeführt, in dem betreffenden Netzknoten eine Schleife vom äußeren zum inneren Ring geschaltet und eine Marke „LoopbackOIdone" gesetzt. Wenn

$$D = \iota$$

ist, sind alle Leitungsbrüche auf dem inneren Ring aufgetreten. Es wird dann, falls bisher noch nicht durchgeführt, in dem betreffenden Netzknoten eine Schleife vom inneren zum äußeren Ring geschaltet und eine Marke „LoopbackIOdone" gesetzt.

Falls Leitungsbrüche aufdem inneren und äußeren Ringvorhanden sind, gibt es die Mengen $U = \{u_1, u_2, ... , u_m\}$ und $D = \{d_1, d_2, ... , d_n\}$. In jedem Netzknoten mit der CNN K, $K^0 \{0, 1, 2, ... , R-1\}$, werden

$$S_{min} := 2R, \quad i0 = 2R, \quad j0 = 2R$$

gesetzt und dann werden alle Paare $(u_i, d_j)$ untersucht.

Für alle Paare $(u_i, d_j)$, wobei $1 \leq i \leq m$, $1 \leq j \leq n$, ergeben sich in ähnlicher Weise wie bei zwei Leitungsbrüchen die folgenden drei Fälle A, B und C:

A) Im ersten Fall, wenn $u_i = d_j$ ist, ist der Netzknoten mit CNN $u_i = d_j$ isoliert.

A1) Wenn $K = u_i = d_j$ ist, ist der Netzknoten mir der CNN K der isolierte Netzknoten, in dem eine Marke „CurrentNodeIsolated" gesetzt wird.

A2) Wenn $K = mod_R(u_i+1)$ ist, ist der Netzknoten mit der CNN K der benachbarte Netzknoten in Zellstromrichtung auf dem inneren Ring, in dem eine Marke „NeighbourIsolatedNodeOI" gesetzt wird. Dieser Netzknoten mit der CNN K schaltet eine Schleife nach der Markenauswertung vom äußeren auf den inneren Ring, falls diese noch nicht besteht.

A3) Wenn $K = mod_R(d_j-1)$ ist, ist der Netzknoten mit der CNN K der benachbarte Netzknoten in Zellstromrichtung auf dem äußeren Ring, in dem eine Marke „NeighbourIsolatedNodeIO" gesetzt wird. Falls noch keine Schleife besteht, schaltet der Netzknoten mit der CNN K eine Schleife nach der Markenauswertung vom inneren auf den äußeren Ring.

B) Im zweiten Fall sei $mod_R(u_i+1) = d_j$, d.h. es liegt mindestens ein doppelter Leitungsbruch vor.

B1) Wenn $K = d_j$ ist, setzt der Netzknoten mit da CNN K eine Marke „DuplexLineBreakOI". Dieser Netzknoten schaltet eine Schleife nach der Markenauswertung vom äußeren auf den inneren Ring, falls diese noch nicht besteht.

B2) Wenn $K = u_i$ ist, setzt der Netzknoten mit der CNN K eine Marke „DuplexLineBreakIO". Dieser Netzknoten schaltet eine Schleife nach der Markenauswertung vom inneren auf den äußeren Ring, falls diese noch nicht besteht.

C) Im dritten Fall liegt eine isolierte Gruppe von Netzknoten vor. Zuerst muß jeder Netzknoten die Gleichung

$$S(i, j) = mod_R(K-d_j) + mod_R(u_i-K)$$

berechnen. Anschließend wird $S_{min} := S(i, j)$, $i0 := i$ und $j0 := j$ gesetzt, wenn $S(i, j) < S_{min}$ ist. $S(i, j)$ dient zur Bestimmung der kleinsten, isolierten Gruppe, die K enthält.

C1) Wenn der Netzknoten mit der CNN K die Bedingung

$$mod_R(K-d_j) + mod_R(u_i-K) < R-1$$

erfüllt, gehört der Netzknoten zu einer bestimmten isolierten Gruppe von Netzknoten.

C1a) Wenn $K = d_j$ ist, ist der Netzknoten mit der CNN K der äußere Endknoten der bestimmten isolierten Gruppe. Dieser setzt eine Marke „EdgeNodeClosedLoopOI" und schaltet eine Schleife nach der Markenauswertung vom äußeren auf den inneren Ring, falls diese noch nicht besteht.

C1b) Wenn $K = u_i$ ist, ist der Netzknoten mit der CNN K der innere Endknoten der bestimmten isolierten Gruppe. Dieser setzt eine Marke „EdgeNodeClosedLoopIO" und schaltet eine Schleife nach der Markenauswertung vom inneren auf den äußeren Ring, falls diese noch nicht besteht.

C2) Wenn der Netzknoten mit der CNN K nicht die Bedingung

$$\mathrm{mod}_R(K-d_j) + \mathrm{mod}_R(u_i-K) < R-1$$

erfüllt, gehört der Netzknoten nicht zu der durch $(u_i, d_j)$ bestimmten isolierten Gruppe von Netzknoten.

C2a) Wenn $K = \mathrm{mod}_R(d_j-1)$ ist, ist der Netzknoten mit der CNN K der benachbarte Netzknoten des äußeren Endknotens der bestimmten isolierten Gruppe und ein innerer Randknoten. Dieser setzt eine Marke „NeighbourClosedLoopIO" und schaltet eine Schleife nach der Markenauswertung vom inneren auf den äußeren Ring, falls diese noch nicht besteht.

C2b) Wenn $K = \mathrm{mod}_R(u_i+1)$ ist, ist der Netzknoten mit der CNN K der benachbarte Netzknoten des inneren Endknotens der isolierten Gruppe und ein äußerer Randknoten. Dieser setzt eine Marke „NeighbourClosedLoopOI" und schaltet eine Schleife nach der Markenauswertung vom äußeren auf den inneren Ring, falls diese noch nicht besteht.

Nachdem alle Paare $(d_j, u_i)$ nach dem oben genannten Schema untersucht worden sind, bilden die Netzknoten mit den CNN $d_{j0}$, $\mathrm{mod}_R(d_{j0}+1)$, ..., $u_{i0}$ unter der Voraussetzung, daß $S_{min} < R-1$ ist, die kleinste isolierte Gruppe von Netzknoten, welche den Netzknoten mit da CNN K enthält. Diese Information kann dazu genutzt werden, um neue Verbindungen zwischen wenigstens zwei Teilnehmern abzulehnen, die zwischen Knoten dieser isolierten Gruppe und solche außerhalb der isolierten Gruppe aufgebaut werden sollen.

Nachdem jeweils in einem Netzknoten die zugehörige Statustabelle ausgewertet und verschiedene Marken gesetzt worden sind, werden die jeweiligen Marken auf dieselbe Weise wie in dem Fall von zwei Leitungsbrüchen interpretiert und Meldungen über eine durchgeführte oder durchzuführende Schleifenaktion gesendet.

In den zuvor beschriebenen lokalen Netzwerken mit jeweils zwei Ringsystemen kann es vorkommen, daß eine Zelle schon alle Netzknoten durchlaufen hat und gelöscht werden muß, weil die im Kopffeld der Zelle enthaltene Adresse keinem Bestimmungsort im Netzwerk zugeordnet werden kann. Eine Adresse in einer Zelle im Netzwerk kann beispielsweise durch physikalische Effekte verändert werden, so daß diese Zelle keine existierende Adresse aufweist. Um solche fehlerhaften Zellen zu entfernen, ist wenigstens ein bestimmter Netzknoten zuständig. Dieser bestimmte Netzknoten weist für den inneren und äußeren Ring im Normalfall eine Überwachungsfunktion (Master-Funktion) auf und wird als Master-Netzknoten bezeichnet. Eine solche Master-Funktion setzt im Kopffeld einer Zelle, die den Master-Netzknoten auf dem inneren oder äußeren Ring durchläuft, ein bestimmtes Bit z.B. auf logisch „1". Dies kann beispielsweise ein unbenutztes Bit des VCI sein. Sonst ist dieses Bit, welches im folgenden als Master-Bit bezeichnet wird, auf logisch „0" gesetzt. Diese Veränderung des Master-Bits können in einem Master-Netz-knoten z.B. die Empfangsschaltungen 30 und 31 (Fig. 2) durchführen. Wenn ein Master-Netzknoten eine Zelle mit einem Master-Bit empfängt, welches auf logisch „1" gesetzt ist, wird diese Zelle z.B. von einer Empfangsschaltung 30 oder 31 gelöscht.

Im Normalfall, wenn im Netzwerk kein Leitungsbruch aufgetreten ist, ist genau ein Netzknoten der Master-Netzknoten mit aktiven (eingeschalteten) Master-Funktionen auf dem inneren und äußeren Ring. Falls ein Leitungsbruch oder mehrere Leitungsbrüche auftreten, wird -wie im folgenden gezeigt wird - eine Master-Funktion für einen Ring abgeschaltet und gegebenenfalls eine Master-Funktion des Master-Netzknotens zu einem anderen Netzknoten verlagert, so daß dieser andere Netzknoten auch eine Master-Funktion aufdem inneren oder äußeren Ring enthält.

Ob ein Netzknoten eine Master-Funktion ein- oder abschalten muß, entscheidet dieser autonom anhand seiner Statustabelleneinträge. Die Enträge in den jeweiligen Statustabellen stimmen - wie oben ausgeführt - nach dem Empfang von Meldungen erster und ggf. zweiter Art in allen Netzknoten überein. Für die Entscheidung ob eine Master-Funktion ein- oder ausgeschaltet werden muß, reicht der Austausch von Meldungen erster und zweiter Art aus. Es wird kein weiterer Meldungsaustausch benötigt, und die Statustabelle benötigt keine anderen Einträge als die über in bestimmten Netzknoten geschalteten Schleifen.

Bei der Initialisierung eines Netzwerkes werden -wie oben beschrieben - nicht nur zyklische Knotennummern (CNN) vergeben, sondern auch die Master-Funktionen auf dem inneren und äußeren Ring eingeschaltet. Diese Master-Funktion kann prinzipiell jeder Netzknoten ausüben, jedoch immer nur genau einer der Netzknoten. Hier wird im folgenden angenommen, daß der Netzknoten mit der CNN 0 diese Master-Funktion erhält. Somit ist nach der Initialisierung und im Normalfall der Netzknoten mit der CNN 0 der Master-Netzknoten.

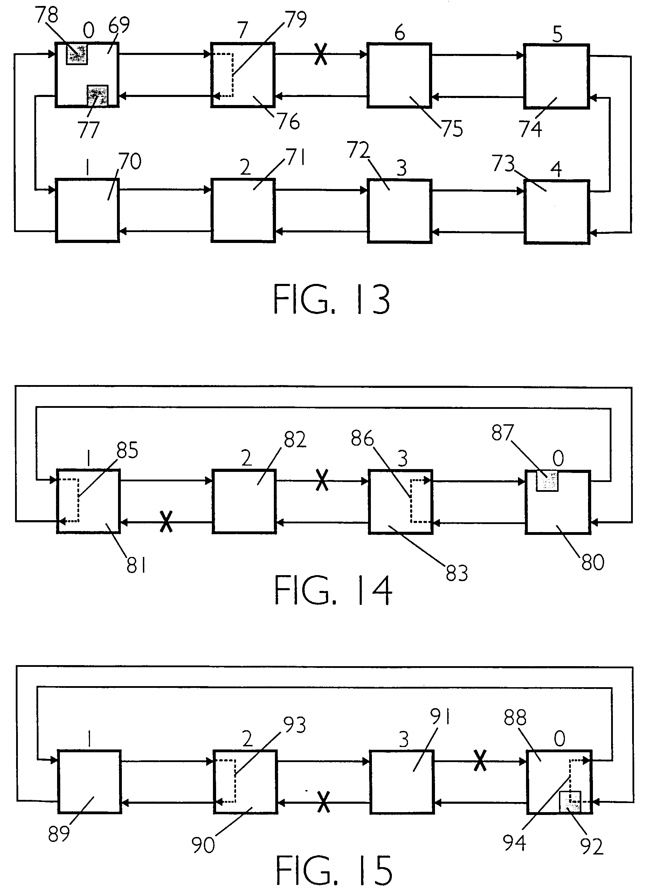

In Fig. 13 ist ein Netzwerk mit 8 Netzknoten 69 bis 76 (CNN 0 bis 7) dargestellt. Der Netzknoten 69 ist der Master-Netzknoten. In der Fig. 13 ist die Master-Funktion für den äußeren und inneren Ring des Netzknotens 69 durch zwei Kästchen 77 und 78 angedeutet. Es soll ein Simplex-Leitungsbruch im äußeren Ring zwischen den Nerzknoten 75 und 76 (CNN 6 und 7) aufgetreten sein. Diesen Leitungsbruch detektiert der Netzknoten 75. Dieser erzeugt dann eine Meldung erster Art, die über seine beiden Sendeleitungen gesendet wird. Nach Erhalt der Meldung und Eintragung in der Statustabelle schaltet der Netzknoten 76 eine Schleife 79 vom äußeren zum inneren Ring. Der Master-Netzknoten 69 schaltet nach Erhalt der Meldung die Master-Funktion für den äußeren Ring (Kästchen 78) ab. Wenn diese Abschaltung der Master-Funktion des äußeren Rings nicht durchgeführt wird, würden Zellen, die den Netzknoten 69 auf dem äußeren Ring passiert haben und deren Bestimmungsort beispielsweise eine Station des Netzknotens 75 ist, nach Durchlaufen der Schleife 79 den Netzknoten 69 zum zweitenmal passieren und dann von der Master-Funktion für den inneren Ring (Kästchen 77) gelöscht werden. Eine solche Abschaltung einer Master-Funktion muß auch dann durchgeführt werden, wenn der Master-Netzknoten selbst eine Schleife geschaltet hat.

Im folgenden werden verschiedene Fälle betrachtet, wenn ein isolierter Knoten vorliegt. Wie oben beschrieben ist, liegt ein isolierter Netzknoten vor, wenn ein Leitungsbruch auf beiden Sendeleitungen eines Netzknotens aufgetreten ist (vgl. Fig. 5 und 6). In Fig. 14 ist ein Netzwerk mit vier Netzknoten 80 bis 83 (CNN 0 bis 3) gezeigt, bei dem zuerst ein Leitungsbruch im äußeren Ring zwischen den Netzknoten 81 und 82 vorgekommen ist. Der Netzknoten 80 ist der Master-Netzknoten, dessen Master-Funktion nach dem ersten Leitungsbruch abgeschaltet worden ist. Es sei angenommen, daß ein zweiter Leitungsbruch auf der Sendeleitung des inneren Rings des Netzknotens 82 von dem Netzknoten 83 detektiert wird. Nach dem Eintreffen der Meldungen erster Art über diesen zweiten Leitungsbruch wird eine Schleife 85 im Netzknoten 81 vom inneren zum äußeren Ring und eine Schleife 86 im Nerzknoten 83 vom äußeren zum inneren Ring geschaltet. Der isolierte Netzknoten ist der Netzknoten 82. Die noch vorhandene Master-Funktion für den inneren Ring (Kästchen 87) im Netzknoten 80 wird nicht verändert.

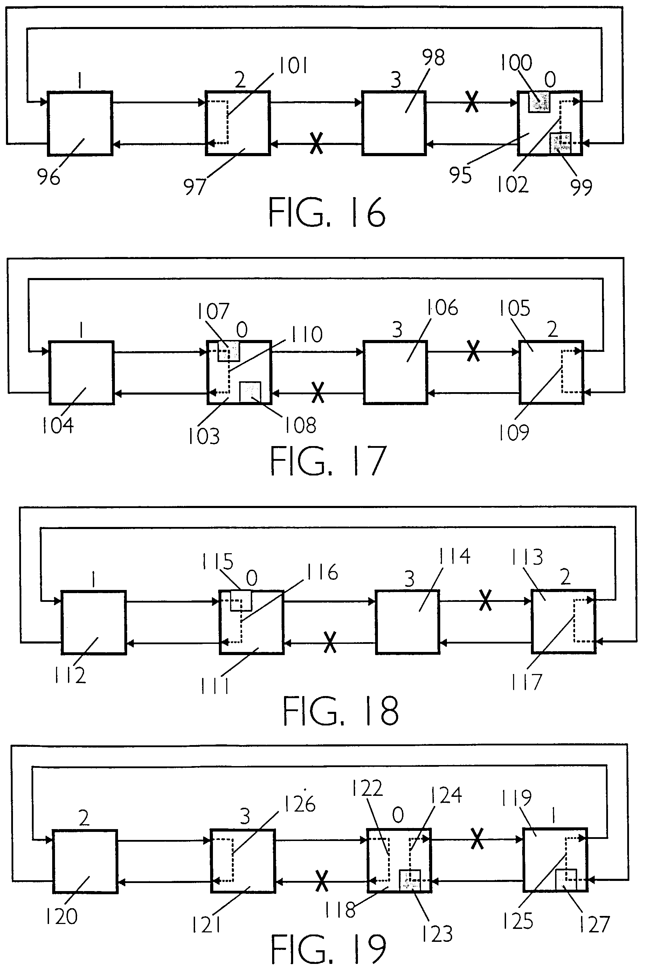

In den Fig. 15 bis 18 sind Fälle gezeigt, bei denen ein isolierter Knoten vorliegt und der Master-Netzknoten eine Schleifenaktion durchführt. Fig. 15 zeigt ein Netzwerk mir vier Netzknoten 88 bis 91 (CNN 0 bis 3), bei dem zuerst ein Leitungsbruch auf der Sendeleitung des inneren Rings des Netzknotens 91 vom Master-Netzknoten 88 detekriert worden ist. Der Master-Netzknoten 88 schaltet dann seine Master-Funktion auf dem inneren Ring ab. Die Master-Funktion aufdem äußeren Ring ist weiter vorhanden (Kästchen 92). Nach dem zweiten Leitungsbruch auf dem äußeren Ring zwischen den Netzknoten 90 und 91 schaltet der Netzknoten 90 eine Schleife 93 vom inneren zum äußeren Ring und der Master-Netzknoten 88 eine Schleife 94 vom äußeren zum inneren Ring. Aus den Einträgen in der Statustabelle wird weiter entnommen, daß der Master-Netzknoten 88 äußerer Randknoten ist. Da der Master-Netzknoten 88 die Master-Funktion für den äußeren Ring noch eingeschaltet hat, findet keine weitere Veränderung hinsichtlich der Master-Funktion statt.

Bei dem in Fig. 16 dargestellten Netzwerk mit den Netzknoten 95 bis 98 (CNN 0 bis 3) ist zuerst ein Leitungsbruch im äußeren Ring zwischen den Netzknoten 97 und 98 und dann ein zweiter Leitungsbruch im inneren Ring zwischen den Netzknoten 95 und 98 aufgetreten. Der isolierte Netzknoten ist der Netzknoten 98. Nach dem ersten Leitungsbruch wird die Master-Funktion (Kästchen 99) des Master-Netzknotens 95 auf dem äußeren Ring abgeschaltet. Der Master-Netzknoten weist nur noch eine Master-Funktion auf dem inneren Ring auf(Kästchen 100). Nach dem zweiten Leitungsbruch schaltet der Netzknoten 97 eine Schleife 101 von dem inneren zum äußeren Ring und der Master-Netzknoten 95 eine Schleife 102 vom äußeren zum inneren Ring. Aus den Statustabelleneinträgen wird entnommen, daß der Master-Netzknoten 95 ein äußerer Randknoten ist.

Daher ist es erforderlich, daß die Master-Funktion auf dem äußeren Ring (Kästchen 99) des Master-Netzknotens wieder eingeschaltet wird. Dieses Einschalten der Master-Funktion auf dem äußeren Ring ist deshalb erforderlich, weil die den Master-Netzknoten 95 durchlaufenden Zellen die Master-Funktion des inneren Rings nicht mehr erreichen können.

In dem Netzwerk da Fig. 17 mit vier Netzknoten 103 bis 106 (CNN 0 bis 3) wird zuerst ein Leitungsbruch auf dem inneren Ring zwischen den Netzknoten 105 und 106 und dann ein zweiter Leitungsbruch auf dem äußeren Ring zwischen dem Master-Netzknoten 103 und dem Netzknoten 106 detektiert. Dadurch entsteht ein isolierter Nerzknoten 106. Nach dem ersten Leitungsbruch wird die Master-Funktion auf dem inneren Ring (Kästchen 107) abgeschaltet, so daß im Master-Netzknoten 103 nur noch die Master-Funktion auf dem äußeren Ring (Kästchen 108) eingeschaltet oder aktiv ist. Nach dem zweiten Leitungsbruch werden Schleifenaktionen in dem Netzknoten 105 (Schleife 109 vom äußeren zum inneren Ring) und in dem Master-Netzknoten 103 (Schleife 110 vom inneren zum äußeren Ring) geschaltet. Wie bei dem Master-Nerzknoten 95 nach Fig. 16 wird bei dem Master-Netzknoten 103 nach der Fig. 17 ebenfalls eine Master-Funktion wieder eingeschaltet, und zwar wird die Master-Funktion des inneren Rings (Kästchen 107) aktiviert. Dieses Einschalten wird nach Auswertung der Statustabelleneinträge des Master-Netzknotens 103 durchgeführt, weil der Master-Netzknoten 103 ein innerer Randknoten ist.

In Fig. 18 sind vier Netzknoten 111 bis 114 (CNN 0 bis 3) dargestellt. Der Netzknoten 111 ist der Master-Netzknoten mit einer Master-Funktion aufdem inneren Ring (Kästchen 115) und dem äußeren Ring. Nach Leitungsbrüchen auf dem äußeren Ring zwischen den Netzknoten 111 und 114 (erster Leitungsbruch) und auf dem inneren Ring zwischen den Netzknoten 113 und 114 (zweiter Leitungsbruch) entsteht ein isolierter Netzknoten 114. Nach dem ersten Leitungsbruch wird die Master-Funktion auf dem äußeren Ring abgeschaltet die auch nicht wieder nach dem zweiten Leitungsbruch eingeschaltet wird, weil der Master-Netzknoten 111 anhand der Statustabelleneinträge feststellt, daß er ein innerer Randknoten ist. Schleifen werden außerdem nach dem zweiten Leitungsbruch in dein Master-Netzknoten 111 vom inneren zum äußeren Ring (Schleife 116) und in dem Nerzknoten 113 vom äußeren zum inneren Ring (Schleife 117) gebildet.

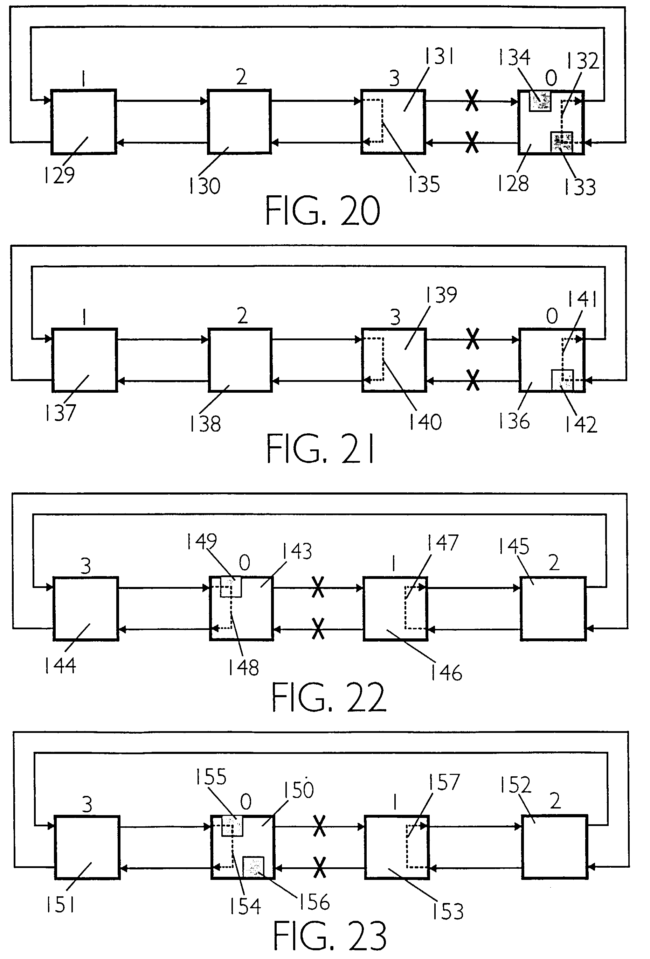

In dem folgenden Fall ist der Master-Netzknoten der isolierte Netzknoten. Hierbei muß ein neuer Master-Netzknoten bestimmt werden. Fig. 19 zeigt ein Netzwerk mit vier Nerzknoten 118 bis 121. Der Master-Netzknoten ist der Netzknoten 118. Es sei angenommen, daß zuerst ein erster Leitungsbruch auf dem inneren Ring zwischen den Nerzknoten 118 und 119 derektiert wird. Als Folge dieses ersten Leitungsbruches werden im Master-Netzknoten 118 eine Schleife 122 vom inneren zum äußeren Ring geschaltet und die Master-Funktion auf dem inneren Ring abgeschaltet. Die Master-Funktion auf dem äußeren Ring (Kästchen 123) ist weiter aktiv. Nach einem zweiten Leitungsbruch auf dem äußeren Ring zwischen den Nerzknoten 118 und 121 werden in den Nerzknoten 118, 119 und 121 weitere Schleifenaktionen durchgeführt. Im Master-Netzknoten 118 wird eine zweite Schleife 124 vom äußeren zum inneren Ring geschaltet, im Netzknoten 119 eine Schleife 125 vom äußeren zum inneren Ring und im Nerzknoten 121 eine Schleife 126 vom inneren zum äußeren Ring geschaltet. Nach Eintreffen der Meldung erster Art führt der Netzknoten 119 nach Auswertung der Statustabelleneinträge jedoch nicht nur eine Schleifenaktion durch, sondern schaltet außerdem eine Master-Funktion auf dem äußeren Ring (Kästchen 127) ein. Prinzipiell könnten auch die Netzknoten 120 oder 121 diese Master-Funktion ausüben. Jedoch ist hier festgelegt, daß derjenige Nerzknoten mit der kleinsten zyklischen Knotennummer (CNN), des neu entstandenen Sub-Ringsystems die Master-Funktion übernimmt. Hierbei ist der Netzknoten 119 mit der neuen Master-Funktion ein äußerer Randknoten.

Mit Hilfe der Fig. 20 und 23 werden im folgenden vier Fälle eines Duplex-Leitungsbruchs beschrieben. Im ersten Fall, welcher in Fig. 20 dargestellt ist, tritt ein erster Leitungsbruch in der Sendeleitung in äußeren Ring eines Master-Netzknotens 128 auf. Weiter enthält das Netzwerk noch Netzknoten 129 und 130. Nach Detektion des ersten Leitungsbruches durch den Netzknoten 131 und Empfang der Meldung erster Art vom Netzknoten 131 schaltet der Master-Netzknoten 128 eine Schleife 132 vom äußeren zum inneren Ring und schaltet die Master-Funktion auf dem äußeren Ring ab (Kästchen 133). Der Master-Netzknoten besitzt noch eine aktive Master-Funktion auf dem inneren Ring (Kästchen 134). Nachdem ein zweiter Leitungsbruch auf dem inneren Ring zwischen den Netzknoten 128 und 131 vom Master-Netzknoten 128 detektiert und diese Änderung in seine Statustabelle eingefügt worden ist, sendet dieser eine Meldung erster Art aus und schaltet nach Auswertung seiner Statustabelleneinträge die Master-Funktion auf dem äußeren Ring (Kästchen 133) wieder ein. In dem Netzknoten 131 wird noch eine Schleife 135 vom inneren zum äußeren Ring geschaltet.

Es sei nun angenommen, daß in einem Netzwerk nach Fig. 21 mit vier Netzknoten 136 bis 139 (CNN 0 bis 3) zuerst ein Leitungsbruch auf dem inneren Ring zwischen den Netzknoten 136 und 139 aufgetreten ist. In diesem Fall inaktiviert der Master-Netzkoten 136 die Master-Funktion aufdem inneren Ring. Im Netzknoten 139 wird eine Schleife 140 vom inneren zum äußeren Ring geschaltet. Nach dem zweiten Leitungsbruch auf dem äußeren Ring zwischen den Netzknoten 136 und 139 wird auch im Master-Netzknoten eine Schleifenaktion zur Bildung einer Schleife 141 vom äußeren zum inneren Ring vorgenommen. Nach Auswertung seiner Statustabelle erkennt der Master-Netzknoten, daß eine Veränderung der Master-Funktion auf dem äußeren Ring (Kästchen 142) nicht erforderlich ist, da er äußerer Randknoten ist und die Master-Funktion auf dem äußeren Ring noch eingeschaltet ist.

Bei dem in der Fig. 22 dargestellten Netzwerk mit vier Netzknoten 143 bis 146 (CNN 0 bis 3) soll angenommen werden, daß ein erster Leitungsbruch im äußeren Ring und anschließend ein zweiter Leitungsbruch im inneren Ringzwischen den Netzknoten 143 und 146 auftritt. Nach dem ersten Leitungsbruch wird die Master-Funktion im äußeren Ring des Master-Netzknotens 143 abgeschaltet und im Netzknoten 146 eine Schleifenaktion durchgeführt (Schleife 147 vom äußeren zum inneren Ring). Nach dem zweiten Leitungsbruch wird zusätzlich eine Schleife 148 vom inneren zum äußeren Ringgeschaltet. Der Master-Netzknoten 143 entnimmt aus seiner Statustabelle, daß die Master-Funktion aufdem inneren Ring (Kästchen 149) nicht verändert werden muß.

Ein vierter Fall eines Duplex-Leitungsbruchs ist in der Fig. 23 dargestellt. Die Fig. 23 zeigt ein Netzwerk mit vier Nerzknoten 150 bis 153 (CNN 0 bis 3), in dem zuerst ein Leitungsbruch auf dem inneren Ring detektiert wird. Nach dem ersten Leitungsbruch wird eine Schleife 154 vom inneren zum äußeren Ring im Master-Netzknoten 150 geschaltet und die Master-Funktion auf dem inneren Ring (Kästchen 155) abgeschaltet. Die Master-Funktion auf dem äußeren Ring (Kästchen 156) bleibt aktiv. Nach dem zweiten Leitungsbruch muß nach Auswertung der Statustabelleneinträge die Master-Funktion auf dem inneren Ring (Kästchen 155) - ähnlich wie zu Fig. 20 beschrieben -wieder eingeschaltet und eine Schleifenaktion (Schleife 157 vom äußeren zum inneren Ring) in Nerzknoten 153 durchgeführt werden.

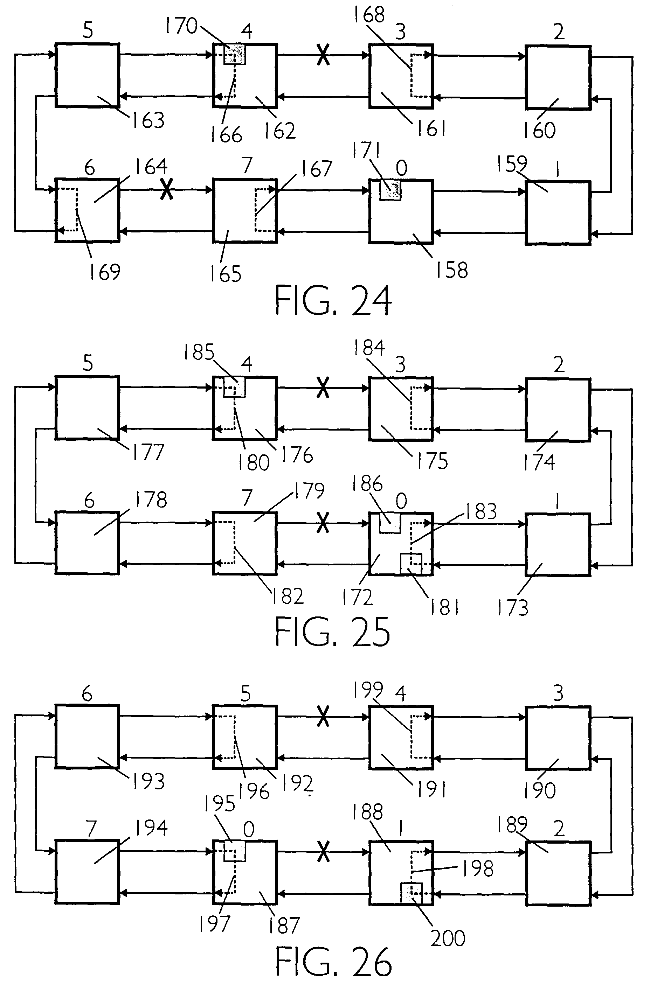

Durch zwei Leitungsbrüche können auch - wie oben zu den Fig. 7 bis 10 beschrieben - zwei Sub-Ringsysteme: mit einer isolierten Gruppe von Netzknoten entstehen. Im folgenden werden anhand der Fig. 24 bis 26 drei verschiedene Beispiele gezeigt, wie beim Entstehen von zwei Sub-Ringsystemen auch die Master-Funktion verändert werden muß. Fig. 24 zeigt ein Netzwerk mit acht Netzknoten 158 bis 165 (CNN 0 bis 7), bei dem ein erster Leitungsbruch im äußeren Ring zwischen den Netzknoten 161 und 162 und ein zweiter Leitungsbruch anschließend im inneren Ringzwischen den Netzknoten 164 und 165 detektiert worden ist. Der Master-Netzknoten ist der Netzknoten 158, der nach dem ersten Leirungsbruch seine Master-Funktion im äußeren Ring abschaltet. Im Netzknoten 162 wird eine Schleife 166 vom äußeren aufden inneren Ring geschaltet. Nach dem zweiten Leitungsbruch wird eine Schleife 167 von äußeren auf den inneren Ring im Netzknoten 165, eine Schleife 168 vom inneren auf den äußeren Ring im Netzknoten 161 und eine Schleife 169 vom inneren auf den äußeren Ring im Netzknoten 164 geschaltet. Da im entstandenen Sub-Ringsystem mit den Nerzknoten 162, 163 und 164 kein Netzknoten eine Master-Funktion hat, wird dann in dem Netzknoten mit der kleinsten zyklischen Knotennummer (d.h. im äußeren Randknoten) eine Master-Funktion auf dem äußeren Ring eingeschaltet. Der Netzknoten 162 stellt dabei anhand seiner Statustabelleneinträge fest, daß er der Netzknoten mit der kleinsten zylkischen Knotennummer (CNN 4) innerhalb des Sub-Ringsystems ist. Es ist auch möglich z.B. den Netzknoten mit der höchsten zyklischen Knotennummer auszuwählen und die Master-Funktion auch auf dem inneren Ring einzuschalten. Der Master-Netzknoten 158 besitzt weiterhin die Master-Funktion (Kästchen 171) im anderen Sub-Ringsystem.

In Fig. 25 ist ein Netzwerk mit acht Nerzknoten 172 bis 179 gezeigt, bei dem der Netzknoten 172 der Master-Netzknoten ist. Dieser führt, wie nachstehend erläutert wird, im Gegensatz zum Master-Netzknoten 158 der Fig. 24 eine Schleifenaktion durch. Ein erster Leitungsbruch tritt im äußeren Ring zwischen den Netzknoten 175 und 176 und anschließend ein zweiter Leitungsbruch im inneren Ring zwischen den Nerzknoten 172 und 179 auf. Nach dem ersten Leitungsbruch wird eine Schleife 180 vom äußeren auf den inneren Ring im Netzknoten 176 geschaltet und die Master-Funktion auf dem äußeren Ring (Kästchen 181) des Master-Netzknotens 172 abgeschaltet. Nach dem zweiten Leitungsbruch werden drei weitere Schleifenaktionen durchgeführt: Schleift 182 vom inneren zum äußeren Ring im Netzknoten 179; Schleife 183 vom äußeren zum inneren Ring im Master-Netzknoten 172; Schleife 184 vom inneren zum äußeren Ring im Netzknoten 175. Da die Netzknoten 176 bis 179 im Sub-Ringsystem keine Master-Funktion haben, muß eine solche Master-Funktion eingeschaltet werden. Diese Master-Funktion wird nach der gleichen Regel - wie zur Fig. 24 erläutert -angewendet. Das bedeutet, daß im Netzknoten 176, der die kleinste zyklische Knotennummer im Sub-Ringsystem mir den Netzknoten 176, 177, 178 und 179 aufweist und daher äußerer Randknoten ist, die Master-Funktion auf dem äußeren Ring (Kästchen 185) nach Auswertung seiner Statustabelle eingeschaltet wird. Der Master-Netzknoten 172 bestimmt infolge seiner Tabellenauswertung, daß er ebenfalls äußerer Randknoten des anderen Sub-Ringsystems ist und schaltet wieder die Master-Funktion auf dem äußeren Ring (Kästchen 181) ein, da keine Zelle mehr von der Master-Funktion auf dem inneren Ring (Kästchen 186) geprüft werden kann.

Auch in dem Netzwerk mit den acht Netzknoten 187 bis 194 der Fig. 26 führt der Master-Netzknoten 187 eine Schleifenaktion durch. Wie bei den Netzwerken nach den Fig. 24 und 25 wird zuerst ein Leitungsbruch im äußeren Ring und zwar zwischen den Netzknoten 191 und 192 detektiert. Nach diesem ersten Leitungsbruch schaltet der Master-Netzknoten 187 seine Master-Funktion auf dem äußeren Ringab. Es ist nur noch die Master-Funktion auf dem inneren Ring (Kästchen 195) des Master-Netzknotens 187 vorhanden. Der Netzknoten 192 schaltet nach dem ersten Leitungsbruch noch eine Schleife 196 vom äußeren auf den inneren Ring. Nach Detektierung eines zweiten Leitungsbruches auf dem inneren Ring zwischen den Netzknoten 187 und 188 werden auch wieder Schleifenaktionen durchgeführt: Schleife 197 vom inneren zum äußeren Ring im Master-Netzknoten 187; Schleife 198 vom äußeren zum inneren Ring im Netzknoten 188; Schleife 199 vom inneren zum äußeren Ring im Netzknoten 191. Im Sub-Ringsystem mit den Netzknoten 188 bis 191 erhält noch der Netzknoten 188 eine Master-Funktion auf dem äußeren Ring (Kästchen 200), da dieser die kleinste zyklische Knotennummer hat. Dies erkennt Netzknoten 188 anhand der Einträge seiner Statustabelle.

Tritt in dem Netzwerk nach Fig. 26 nachträglich ein Leitungsbruch im äußeren Ring zwischen den Netzknoten 187 und 188 auf; so detektiert Netzknoten 187 diesen Leitungsbruch. Zusätzlich informiert Netzknoten 187 auch die anderen erreichbaren Netzknoten 192, 193 und 194 über diesen Defekt. Durch diese Information oder Meldung des Netzknotens 187 werden die Statustabellen der Netzknoten 192, 193 und 194 nicht verändert, da schon Einträge in den Statustabellen der Netzknoten 192, 193 und 194 enthalten sind, die sich auf durchgeführte Schleifenaktionen beziehen. Die eingeschaltete Master-Funktion wird auch nicht geändert. Da die Einträge der Statustabellen das Schalten einer Schleife und ggf. den Leitungsbruch der Sendeleitung zwischen den Netzknoten 187 und 188 des äußeren Rings bedeuten, besitzen alle Netzknoten auch für den Fall der defekten Empfangsleitung auf dem äußeren Ring des Nerzknotens 187 die korrekten Einträge.

Für das Ein- und Ausschalten von Master-Funktionen lassen sich zusammenfassend folgende Regeln angeben:

1. Nach der Initialisierung eines Netzwerkes erhält genau ein Netzknoten die Master-Funktionen für den inneren und äußeren Ring, z.B. derjenige Netzknoten mix der kleinsten zyklischen Knotennummer 0.

2. Bei einem Simplex-Leitungsbruch wird die Master-Funktion des Master-Netzknotens desjenigen Ringes abgeschaltet, der einen Leitungsbruch aufweist.

3. Wenn ein Sub-Ringsystem entsteht, welches den nach der Initialisierung gebildeten Master-Netzknoten enthält, ändert dieser Master-Netzknoten nicht seine noch vorhandene Master-Funktion auf einem Ring, wenn der Master-Netzknoten kein Randknoten ist. Als Sub-Ringsystem ist auch ein Netzwerk nach einem Duplex-Leitungsbruch (Sub-Ringsystem enthält alle Netzknoten) oder nach Entstehen eines isolierten Netzknotens (Sub-Ringsystem enthält alle Netzknoten bis auf den isolierten Netzknoten) anzusehen. Wenn der Master-Netzknoten ein äußerer Randknoten ist und ein erster Leitungsbruch auf dem äußeren und ein zweiter Leitungsbruch auf dem inneren Ring aufgetreten ist, schaltet der Master-Netzknoten seine Master-Funktion auf dem äußeren Ringwieder ein, wenn die Master-Funktion zuvor abgeschaltet worden ist. Wenn der Master-Netzknoten ein innerer Randknoten ist und ein erster Leitungsbruch auf dem inneren und ein zweiter Leitungsbruch auf dem äußeren Ring aufgetreten ist, schaltet der Master-Netzknoten seine Master-Funktion auf dem inneren Ring wieder ein, wenn die Master-Funktion zuvor abgeschaltet worden ist.

4. Wenn ein Sub-Ringsystem entsteht, welches den nach der Initialisierung gebildeten Master-Netzknoten nicht enthält, wird in einem Netzknotens dieses Sub-Ringsystems eine geeignete Master-Funktion (z.B. die Master-Funktion auf dem äußeren Ring des Netzknotens mit der kleinsten zyklischen Knotennummer in diesem Sub-Ringsystem) eingeschaltet.

**Patentansprüche**

1. Lokales Netzwerk mir mehreren über wenigstens zwei Ringe miteinander gekoppelten Netzknoten, von denen ein Netzknoten einen Master-Netzknoten mir einer Master-Funktion für jeden Ring zur Löschung von den Master-Netzknoten wiederholt erreichenden Nachrichten bildet,
dadurch gekennzeichnet,

daß ein Netzknoten nach Detektierung eines Defekts auf einer zugeordneten Sendeleitung eines Ringes zur Sendung einer Meldung über den Ort des Defekts an alle anderen erreichbaren Netzknoten vorgesehen ist,
daß ein Netzknoten mir einem Defekt auf seiner Sendeleitung zur Schaltung einer Schleife vorgesehen ist und
daß der Master-Netzknoten nach Detektierung eines Defekts auf einer zugeordneten Sendeleitung oder nach Empfang der Meldung über den Ort des Defekts zur Abschaltung der Master-Funktion vorgesehen ist, die dem Ring mit dem Defekt zugeordnet ist.

2. Lokales Netzwerk nach Anspruch 1,
dadurch gekennzeichnet,

daß jeder Netzknoten nach Detektierung eines Defekts auf einer zugeordneten Sendeleitung oder nach Empfang der Meldung über den Ort des Defekts zur Eintragung des Ortes des Defekts in eine Statustabelle vorgesehen ist und
daß der Master-Netzknoten zur Abschaltung einer Master-Funktion nach Auswertung der Statustabelle vorgesehen ist.

3. Lokales Netzwerk nach Anspruch 1,
dadurch gekennzeichnet,

daß der Master-Netzknoten entweder zur Detektierung eines Defekts auf einer zugeordneten Sendeleitung oder zum Empfang einer Meldung über den Ort eines Defekts eines Rings vorgesehen ist,
daß ein Netzknoten zur Schaltung einer Schleife vorgesehen ist, wenn eine seiner zugeordneten Sende- oder Empfangsleitungen einen Defekt aufweist, und
daß der Master-Netzknoten bei einer abgeschalteten Master-Funktion des Rings mit dem ersten Defekt und bei einem nachfolgenden Defekt auf einer zugeordneten Sende-oder Empfangsleitung zur Einschaltung der Master-Funktion des Rings mit dem ersten Defekt vorgesehen ist.

4. Lokales Netzwerk nach Anspruch 1,
dadurch gekennzeichnet,

daß nach einem Auftreten von wenigstens zwei Defekten ein bestimmter Netzknoten, der Teil eines Ring-Subsystems ist, das nach Auftreten der Defekte durch Schaltungen von Schleifen entsteht und nicht den Master-Netzknoten enthält, zur Einschaltung einer Master-Funktion vorgesehen ist.

5. Lokales Netzwerk nach Anspruch 1,

dadurch gekennzeichnet,

daß ein eine Master-Funktion aufweisender Nerzknoten eine Empfingsschaltung enthält, welche nach erstmaligem Empfang einer Nachricht zur Markierung der Nachricht und welche nach Empfang einer Nachricht mit einer Markierung zur Löschung der Nachricht vorgesehen ist.

6.  Lokales Netzwerk nach Anspruch 1,
    dadurch gekennzeichnet,

daß das lokale Netzwerk ein nach dem asynchronen Transfermodus (ATM) arbeitendes Netzwerk enthalt, welches zur Übertragung von Nachrichten und Meldungen mittels Zellen vorgesehen ist und
daß ein eine Master-Funktion aufweisender Netzknoten eine Empfangsschaltung enthält, welche nach erstmaligen Empfang einer Zelle zur Setzung eines bestimmten Bits im Kopffeld der Zelle und welche nach Empfang einer Zelle mit einem gesetzten Bit zur Löschung der Zelle vorgesehen ist.

7.  Netzknoten in einem lokalen Netzwerk, welches mit weiteren Netzknoten über wenigstens zwei Ringe gekoppelt ist,
    dadurch gekennzeichnet,

daß der Netzknoten eine ein- und abschaltbare Master-Funktion enthalt, die zur Löschung von Nachrichten vorgesehen ist, die wenigstens einmal vollständig einen Ring durchlaufen haben.

8.  Netzknoten nach Anspruch 7,
    dadurch gekennzeichnet,

daß der Netzknoten bei eingeschalteten Master-Funktionen nach Detektierung eines Defekts auf einer zugeordneten Sendeleitung eines Ringes oder nach Empfang der Meldung über den Ort des Defekts von einem anderen Netzknoten zur Abschaltung der Master-Funktion eines Rings vorgesehen ist, die dem Ring mit dem Defekt zugeordnet ist.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26